(19) **Europäisches Patentamt / European Patent Office / Office européen des brevets**

(11) **EP 4 583 390 A1**

(12) **EUROPEAN PATENT APPLICATION**
published in accordance with Art. 153(4) EPC

(43) Date of publication:
09.07.2025 Bulletin 2025/28

(51) International Patent Classification (IPC):
H02M 7/12 (2006.01)　　　H02M 7/48 (2007.01)
H02M 7/493 (2007.01)

(21) Application number: 23859682.9

(22) Date of filing: 22.02.2023

(52) Cooperative Patent Classification (CPC):
H02M 7/12; H02M 7/48; H02M 7/493

(86) International application number:
PCT/JP2023/006389

(87) International publication number:
WO 2024/047908 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.08.2022 JP 2022137180

(71) Applicant: Hitachi, Ltd.
Tokyo 100-8280 (JP)

(72) Inventors:
• ITO, Tomomichi
  Tokyo 100-8280 (JP)
• SUGIMASA, Masatoshi
  Tokyo 100-8280 (JP)
• KAKUYA, Hiromu
  Tokyo 100-8280 (JP)

(74) Representative: MERH-IP Matias Erny Reichl
Hoffmann
Patentanwälte PartG mbB
Paul-Heyse-Straße 29
80336 München (DE)

(54) **POWER CONVERSION SYSTEM AND METHOD FOR CONTROLLING SAME**

(57) A power conversion system includes a load supply voltage adjustment unit that adjusts a load supply voltage based on a load supply current command value calculated based on a load state quantity and an operation command, a self-excited power converter that includes a reactor serving to smooth a DC current and suppress a harmonic current flowing out to an AC power supply, and a current control unit that controls a current flowing through the reactor based on a current command value for maintaining a DC capacitor voltage included in the self-excited power converter at a predetermined value and a current command value for controlling reactive power so that a power factor of AC power output to the AC system side matches a predetermined power factor.

*FIG. 1*

EP 4 583 390 A1

## Description

Technical Field

The present invention relates to a power conversion system that supplies power to a DC load and a control method thereof.

Background Art

In order to suppress global warming, technologies for utilizing hydrogen, which is a carbon-free fuel, have been actively researched and developed. Large scale hydrogen production is also required for these hydrogen demand applications, and demonstration projects for hydrogen production by water electrolysis tanks are progressing in various countries around the world.

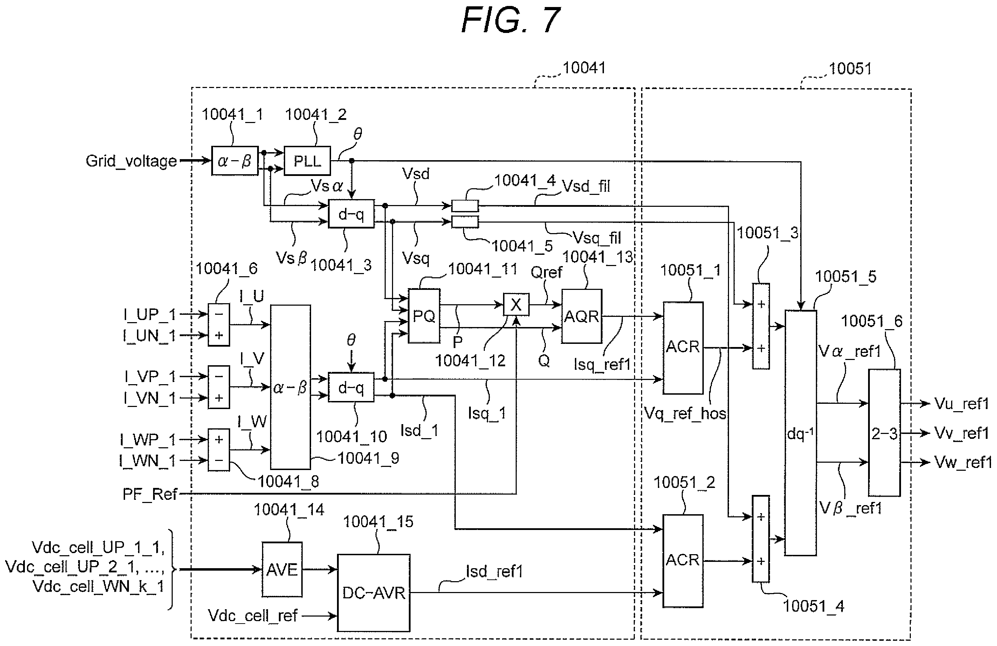

In particular, in Europe, a demonstration project for a hydrogen production device of several tens of MW utilizing power generated by offshore wind power is being planned and progressed, and it is expected that the size of the water electrolysis device will continue to increase in the future. In the production of MW-class hydrogen by a water electrolysis tank, as an example thereof is shown in Table 6.1 of NPL 1, the water electrolysis tank has low pressure and large current characteristics of several hundred V and several thousand A, and as shown in Figure 7.4 of NPL 1, DC current supply by a thyristor rectifier has been applied to a power supply thereof.

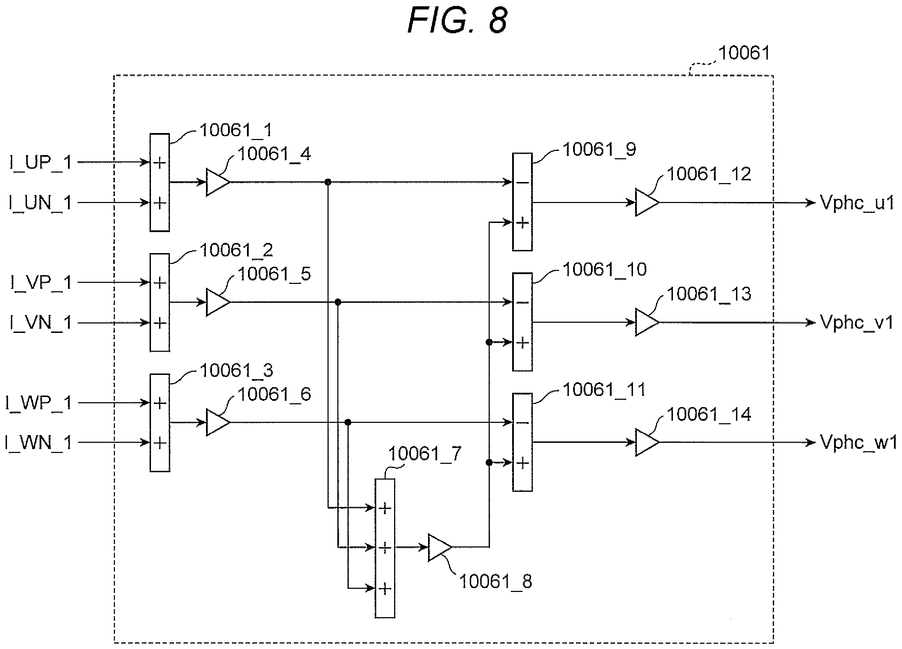

The thyristor is superior to a self-arc-extinguishing semiconductor switching element such as an IGBT (Insulated Gate Bipolar Transistor) in large current supply, but has a disadvantage that a large low-order harmonic current flows out to a system and a power factor changes depending on an operating point. Therefore, as illustrated in Figure 8.2 of NPL 1, an accessory device such as a harmonic filter and a power factor improving STATCOM is required. In addition, the AC voltage supplied to the thyristor rectifier is several hundred V, and it is necessary to flow a large current not only in the DC circuit but also in the AC circuit. Therefore, the transformer is a large facility, and in a water electrolysis system of several 10 to several 100 MW, it is a problem to avoid an increase in size and weight of the entire system.

As a method for not installing accessory equipment such as a harmonic filter and a power factor improving STATCOM, a self-excited power converter including a self-arc-extinguishing switching element of a rectifier can be considered. As a technique of supplying power to a large current DC load by a self-excited power converter, PTL 1 discloses a power supply configuration and a control method in which DC output terminals of a plurality of self-excited power converters are provided with a reactor for suppressing a cross current and a current sensor for detecting a cross current, a cross current flowing between the self-excited power converters is detected when there is no load, and an output voltage command value of the self-excited power converter is corrected.

Citation List

Patent Literature

PTL 1: JP 2002-234365 A

Non-patent Literature

NPL 1: Chalmers University of Technology, "Electric infrastructure for Electrolyser systems, Design proposal for AC and DC distribution systems -Master's thesis in Electric Power Engineering"

However, in the technique described in PTL 1, it is necessary to additionally provide a reactor that is not saturated with a large current in the DC output terminal, and there is a concern about an increase in size of the system. Furthermore, since the voltage drop in the water electrolysis tank varies depending on the load current to be supplied, there is a problem that the cross current suppression function at other operating points is not secured only by adjusting the output voltage at no load as a power supply for a water electrolysis tank in which power supply to the load is required in a wide voltage range only by correcting the output voltage command value only at the rated value.

Summary of Invention

Technical Problem

The present invention has been made in view of the above problems, and an object of the present invention is to provide a power conversion system that includes a plurality of self-excited power converters each having a DC output circuit connected in parallel, and supplies a large DC current exceeding 1000 A to a load. In the power conversion system, a cross current between the self-excited power converters can be suppressed without adding an additional element to a main circuit, and a compact power conversion system and a control method for the power conversion system achieve a high utilization rate of components.

Solution to Problem

In order to solve the above problems, a power conversion system according to the present invention connects to an AC system via a transformer and supplies DC power to a load device, the power conversion system including: a load supply voltage adjustment unit that adjusts a load supply DC voltage based on a load supply DC current command value calculated based on a load state quantity and an operation command; a self-excited power converter that includes a reactor serving to smooth a DC current and suppress a harmonic current flowing out to an AC power supply; and a current control unit that controls a current flowing through the reactor based on an AC current command value for maintaining a DC capacitor voltage included in the self-excited power converter at a predetermined value and a current command value for controlling reactive power so that a power factor of AC power output to the AC system side matches a predetermined power factor.

Advantageous Effects of Invention

According to the present invention, it is possible to construct a power conversion system capable of suppressing a cross current circulating between self-excited power converters without adding an additional element to a main circuit of the self-excited power converter, achieving compactness and high utilization rate of components, and a control method for the power conversion system.

Other features of the invention will be clear from the description and the accompanying drawings. In addition, objects, configurations, and effects besides the above description will be apparent through the explanation on the following embodiments.

Brief Description of Drawings

[FIG. 1] FIG. 1 is a diagram for explaining an overall configuration of a power conversion system according to a first embodiment of the present invention.
[FIG. 2] FIG. 2 is a diagram for explaining a configuration of a self-excited power converter constituting a part of the power conversion system.
[FIG. 3] FIG. 3 is a diagram for explaining a configuration of a cell converter constituting a self-excited power converter.
[FIG. 4] FIG. 4 is a block diagram illustrating a functional configuration of an integrated control device that controls the power conversion system.
[FIG. 5] FIG. 5 is a graph showing a relationship between a voltage, a current, and a hydrogen production amount in a water electrolysis tank.
[FIG. 6] FIG. 6 is a block diagram illustrating a functional configuration of a DC current command value calculator included in the integrated control device.
[FIG. 7] FIG. 7 is a block diagram illustrating functional configurations of an AC current command value calculator and an AC current controller included in the integrated control device.
[FIG. 8] FIG. 8 is a block diagram of an inter-phase balance controller included in the integrated control device.
[FIG. 9] FIG. 9 is a block diagram of a cell balance controller included in the integrated control device.
[FIG. 10] FIG. 10 is an explanatory diagram of a voltage command value synthesizer included in the integrated control device.
[FIG. 11] FIG. 11 is an explanatory diagram of a phase voltage command value synthesizer included in the integrated control device.
[FIG. 12] FIG. 12 is an explanatory diagram of a gate signal generator included in the integrated control device.
[FIG. 13] FIG. 13 is an explanatory diagram of an equivalent circuit of a self-excited power converter 10.
[FIG. 14] FIG. 14 is an equivalent circuit obtained by considering an approximate circuit of FIG. 13 from DC output terminals P and N and a simplified circuit diagram thereof.
[FIG. 15] FIG. 15 is an explanatory diagram of an operation example of a power conversion unit according to the first embodiment.
[FIG. 16] FIG. 16 is an explanatory diagram of an integrated control device according to a second mode of the first embodiment.
[FIG. 17] FIG. 17 is an explanatory diagram of a DC current controller included in the integrated control device.

[FIG. 18] FIG. 18 is an operation example in the second mode of the first embodiment.

[FIG. 19] FIG. 19 is an explanatory diagram of a power conversion system according to a second embodiment of the present invention.

[FIG. 20] FIG. 20 is a view for explaining a configuration of a water electrolysis tank unit.

[FIG. 21] FIG. 21 is a block diagram for explaining a functional configuration of an integrated control device 100_a.

[FIG. 22] FIG. 22 is an explanatory diagram of an abnormality determination method of an abnormality detector included in the integrated control device.

[FIG. 23] FIG. 23 is a block diagram illustrating a functional configuration of a DC current controller.

Description of Embodiments

Hereinafter, embodiments of the invention will be described using the drawings.

[First Embodiment]

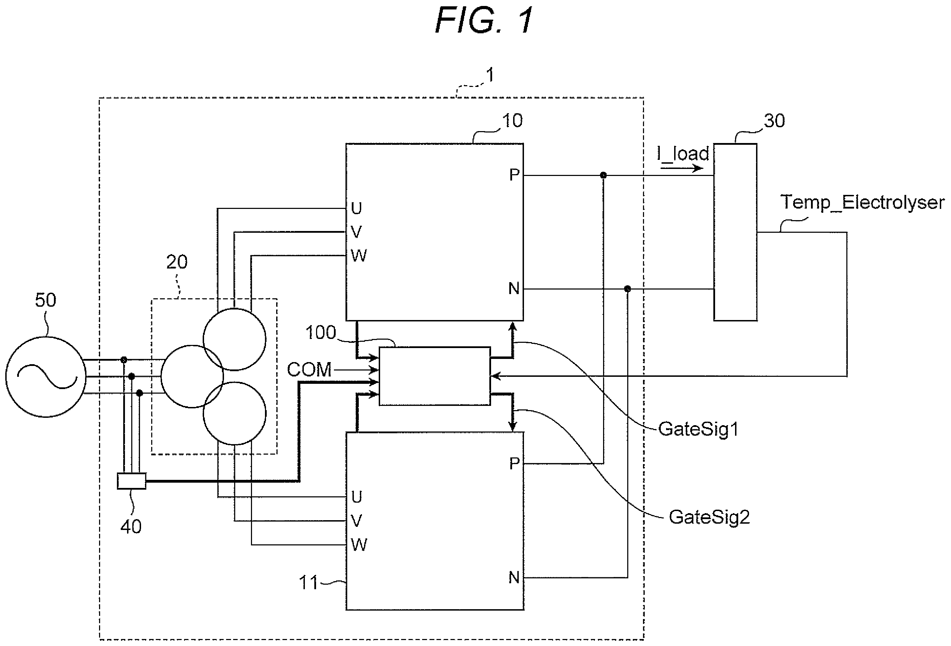

A first embodiment of the present invention will be described using FIG. 1. FIG. 1 shows a power conversion system 1 of the present invention and a water electrolysis tank unit 30 which is a load of the power conversion system 1. The power conversion system 1 receives AC power from an AC system 50 and supplies a large current exceeding 1000 A to the water electrolysis tank unit 30.

The power conversion system 1 roughly includes a system interconnection transformer 20, self-excited power converters 10 and 11, and an integrated control device 100. The transformer 20 is a three-winding transformer that provides isolated AC voltage to the self-excited power converters 10 and 11.

The DC output circuits of the self-excited power converters 10 and 11 are connected in parallel, and the sum of the DC output currents of the self-excited power converters 10 and 11 is supplied to the water electrolysis tank unit 30 as a load current I_load.

The integrated control device 100 receives the system voltage detected by an AC voltage sensor 40, detection values of the voltage/current sensors of the self-excited power converters 10 and 11, temperature information of the water electrolysis tank unit 30, and an operation command COM input from a system controller (not illustrated), and outputs gate signals GateSig1 and GateSig2 for cell converters (described later) constituting the self-excited power converters 10 and 11.

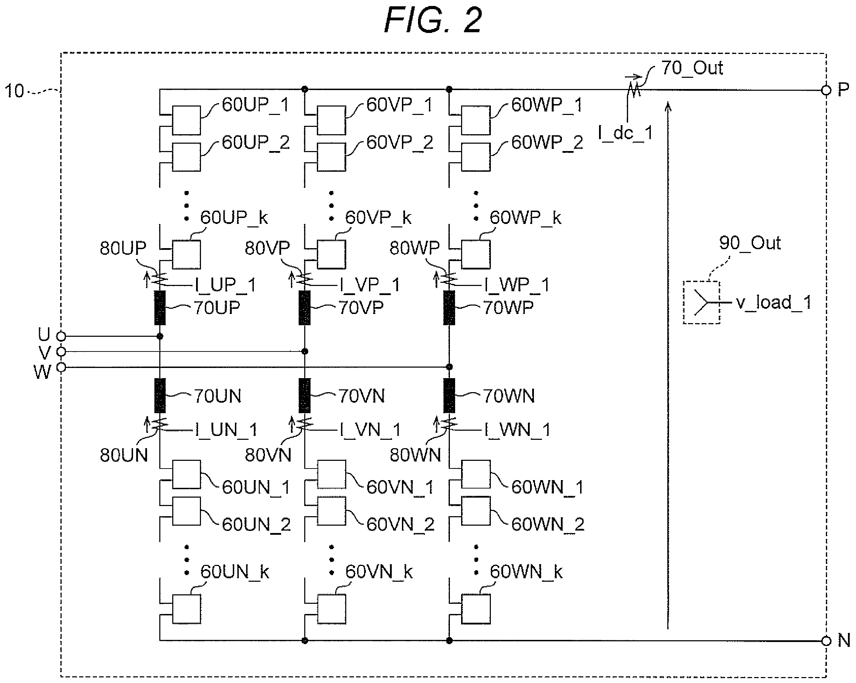

FIG. 2 illustrates a main circuit configuration of the self-excited power converter 10. The self-excited power converter 10 is a multi modular converter that connects a plurality of cell converters in series.

The AC input terminals U, V, and W are connected to a midpoint of a serial body of a cell converter and a buffer reactor constituting the leg as illustrated in the drawing. Since the U-phase, V-phase, and W-phase legs have similar configurations, the circuit configuration will be described focusing on the U phase.

The U-phase leg includes a P-side arm including k cell converters 60UP_1, 60UP_2, ..., and 60UP_k and a buffer reactor 70UP, and an N-side arm similarly including k cell converters 60UN_1, 60UN_2, ..., and 60UN_k and a buffer reactor 70UN. The cell converter has AC output terminals connected in series, and the sum of the AC output terminals of the cell converter is output to an AC input terminal **U.** Each cell converter includes a DC capacitor, and can output a multi-level quasi-AC voltage as an arm by shifting the switching timing of the cell converter, so that a harmonic current flowing out to the AC system side can be greatly reduced as compared with the conventional two-level or three-level self-excited power converter, and a main circuit configuration without a harmonic filter becomes possible. In addition, since the commercial frequency component included in the arm output voltage can control the amplitude and the phase independently, the operation can be performed at a desired power factor.

Each arm of the present embodiment is provided with a current sensor that detects the current flowing through the arm, and the arm current is detected with the direction, as positive, from the DC output terminal N side to the DC output terminal P side of the self-excited power converter, and the detection values I_UP_1, I_UN_1, I_VP_1, I_VN_1, I_WP_1, and I_WN_1 are output to the integrated control device 100.

In addition, the current supplied to the load from the DC output terminals P and N is detected by a current sensor 70_Out, and a detection value I_dc_1 is output to the integrated control device 100. The differential voltage between the DC output terminals P and N is detected by a voltage sensor 90_Out, and a detection value V_load_1 is output to the integrated control device 100.

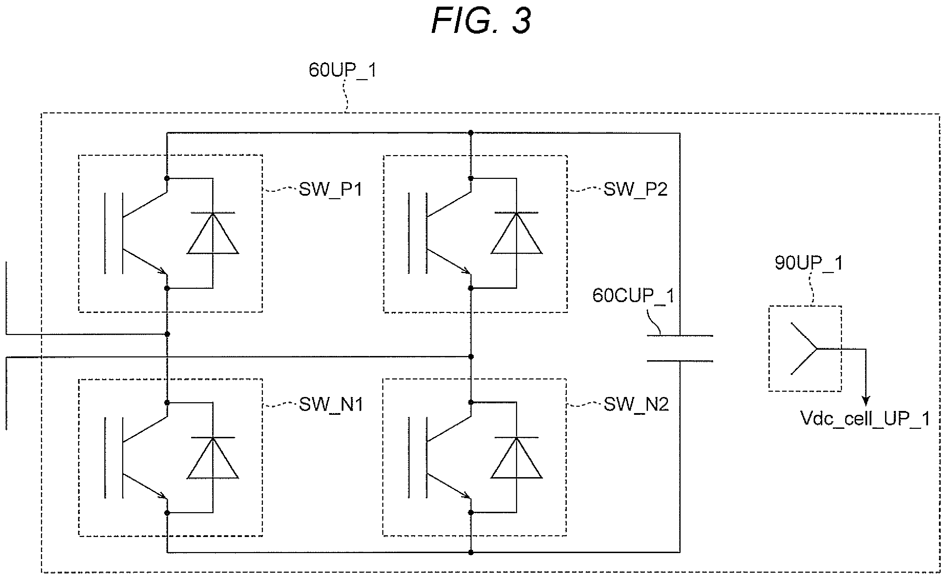

The cell converters illustrated in FIG. 2 all have the same main circuit configuration. As a representative example, a main circuit configuration of the cell converter 60UP_1 will be described using FIG. 3.

The cell converter 60UP_1 is a full-bridge chopper including switching modules SW_P1, SW_P2, SW_N1, and SW_N2 including an IGBT and a diode connected in anti-parallel to the IGBT, and a DC capacitor 60CUP_1. The voltage of the DC capacitor 60CUP_1 is detected by a voltage sensor 90UP_1, and a detection value Vdc_cell_UP_1 is output to the integrated control device 100. In addition, the IGBT of the switching module is controlled to be ON/OFF by a gate signal output from the integrated control device 100, and outputs a desired voltage to the AC output terminal.

An element having a rated current of 100 A or more is selected as the switching module, and a large current of 1000 A or more is output to the water electrolysis tank unit 30 as a load by connecting a self-excited power converter including the cell converter in parallel.

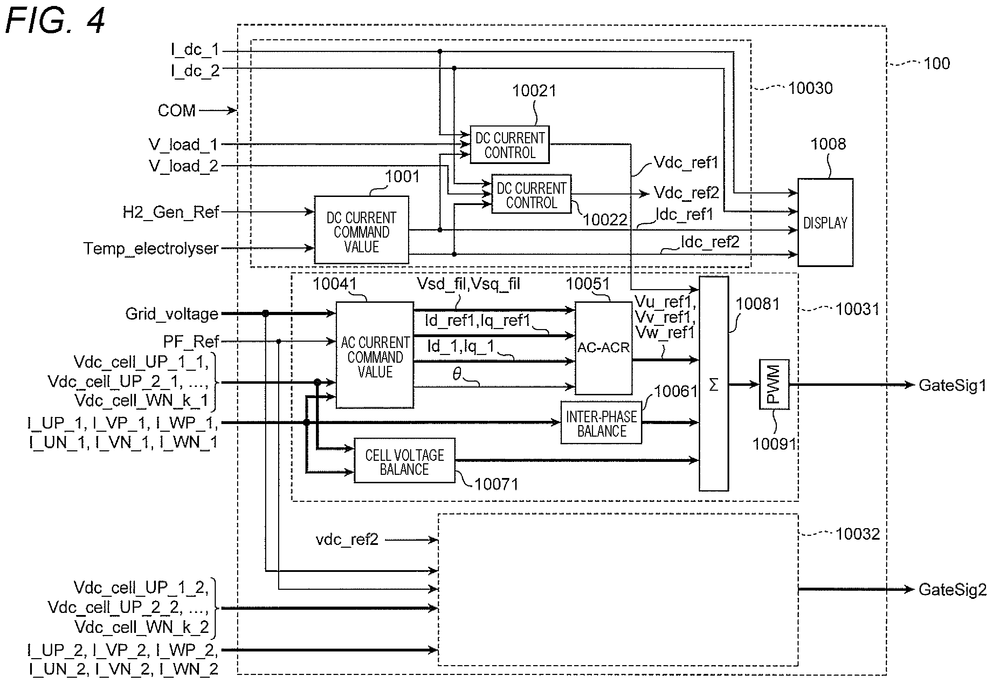

Next, calculation blocks of the integrated control device 100 will be described using FIG. 4. The integrated control device 100 largely includes a hydrogen production calculation unit 10030, unit converter control units 10031 and 10032, and a display device 1008.

The integrated control device 100 receives a hydrogen production amount command value H2_Gen_Ref, an operation command COM, a power factor command value PF_Ref, and a state quantity detection value detected by each sensor, which are received from a host control device (not illustrated), and outputs the gate signals GateSig1 and GateSig2 for driving the cell converters of the self-excited power converters 10 and 11. In addition, the DC output current detection values of the self-excited power converters 10 and 11 and the DC output current command value of the self-excited power converter calculated according to the hydrogen production amount command and the operation command COM are input to the display device 1008, and are graphically displayed. From the graph displayed on the display device 1008, the operator of the present water electrolysis tank system can confirm the behavior of the system by visually observing the DC output current command value of the each self-excited power converter calculated as necessary for the desired hydrogen production device and the DC output current detection value that is the actual result.

The operation command COM is a signal that controls the gate blocking/deblocking of the self-excited power converters 10 and 11 and the clearing/activation of the integral calculation in the integrated control device 100. While the COM is negative, all of the gate signals GateSig1 and GateSig2 are OFF, and the integrators included in the hydrogen production calculation unit 10030 and the unit converter control units 10031 and 10032 clear the calculation together with the internal variables except for the low-pass filter. When the COM becomes active, the operations of all the integration calculator are started, ON and OFF of the gate signals GateSig1 and GateSig2 are also calculated according to the calculations of the unit converter control units 10031 and 10032, and the self-excited power converters 10 and 11 realize the power conversion by the gate signals.

The unit converter control unit 10031 receives a system voltage detection value Grid_voltage detected by the voltage sensor 40, the power factor command value PF_Ref output from a host controller (not illustrated), the cell converter DC voltage detection values Vdc_cell_UP_1_1 to Vdc_cell_WN_k_1, the arm current detection values I_UP_1, I_UN_1, I_VP_1, I_VN_1, I_WP_1, and I_WN_1, calculates a voltage command value of each cell converter such that the DC voltage of the cell converter constituting the self-excited power converter 10 matches a predetermined voltage, and the power received by the self-excited power converter 10 matches a desired power factor, and outputs a gate signal. In addition, a DC output voltage command value Vdc_ref1 for DC output current control, which is a feature of the present invention, is added to the voltage command value, whereby individual DC current control of the self-excited power converters 10 and 11 becomes possible. A mechanism that enables DC current control will be described later.

Similarly to the unit converter control unit 10031, the unit converter control unit 10032 receives a system voltage detection value, a power factor command value PF_Ref, cell converter DC voltage detection values Vdc_cell_UP_1_2 to Vdc_cell_WN_k_2, arm current detection values I_UP_2, I UN_2, I_VP_2, I_VN_2, I_WP_2, and I_WN_2, and calculates the gate signal GateSig2. Since the control block of the unit converter control unit 10032 is similar to that of the unit converter control unit 10031, the description thereof will be omitted.

The unit converter control unit 10031 includes an AC current command value calculator 10041, an AC current controller 10051, an inter-phase balance controller 10061, a cell voltage balance controller 10071, a voltage command value synthesizer 10081, and a gate signal generator 10091.

The AC current command value calculator 10041 calculates an active current command value Isd_ref1 to be output to the system such that the average value of the cell converter DC voltage detection values matches a predetermined value. In addition, a reactive current command value Isq_ref to be output to the system is calculated such that the power factor of the self-excited power converter 10 matches the power factor command value PF_Ref.

In addition, a positive-phase voltage phase $\theta$ of the AC system connected to the power conversion system 1 is calculated from the system voltage detection value, and based on the phase angle, an active current Isd_1 and a reactive current Isq_1 output from the current self-excited power converter 10 to the system side, and a system voltage d-axis component filter value Vsd_fil and a system voltage q-axis component filter value used for feedforward calculation of AC current control are calculated and output to the AC current controller 10051. Based on the output signal from the AC current command value calculator 10041, the AC current controller 10051 calculates AC current control voltage command values (AC voltage command values) Vu_ref1, Vv_ref1, and Vw_ref1 such that the active current Isd_1 and the reactive current Isq_1 match the respective command values Isd_ref1 and Isq_ref1, and outputs the calculated AC current control voltage command values to the voltage command value synthesizer 10081. Details will be described later using FIG. 7.

The arm current detection values I_UP_1, I_UN_1, I_VP_1, I_VN_1, I_WP_1, and I_WN_1 are input to the inter-phase balance controller 10061, and the inter-phase balance controller calculates a correction voltage command value such that the DC current components flowing in the legs of the respective phases are balanced, and outputs the calculation result to the voltage command value synthesizer 10081. Details will be described later using FIG. 8.

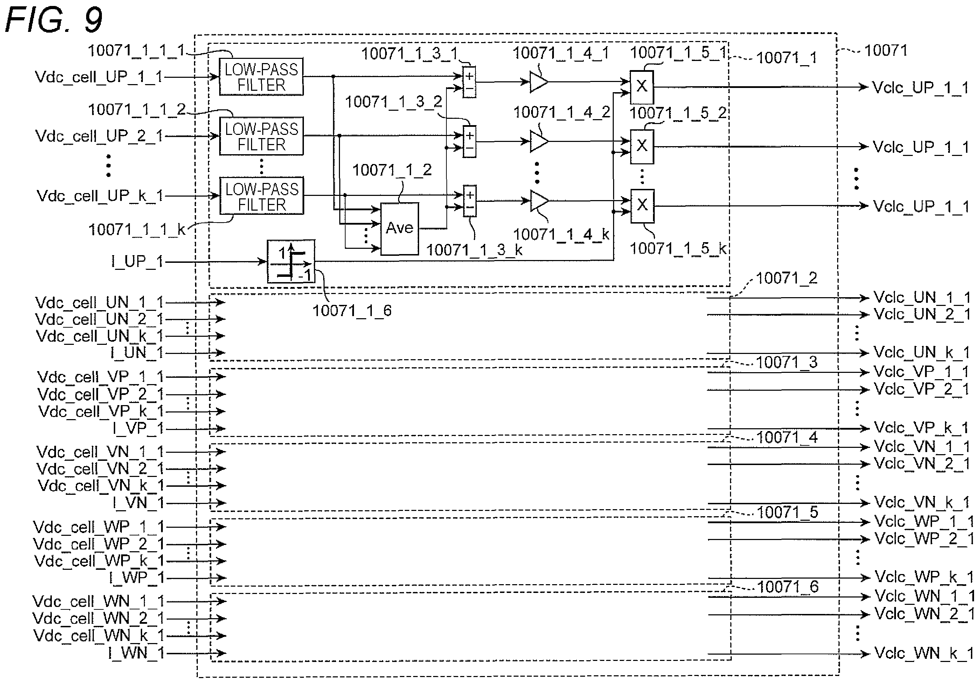

The cell voltage balance controller 10071 calculates a compensation voltage command value so that the DC capacitor voltage of an intra-arm cell converter is balanced, and outputs the calculation result to the voltage command value synthesizer 10081. Details will be described later using FIG. 9.

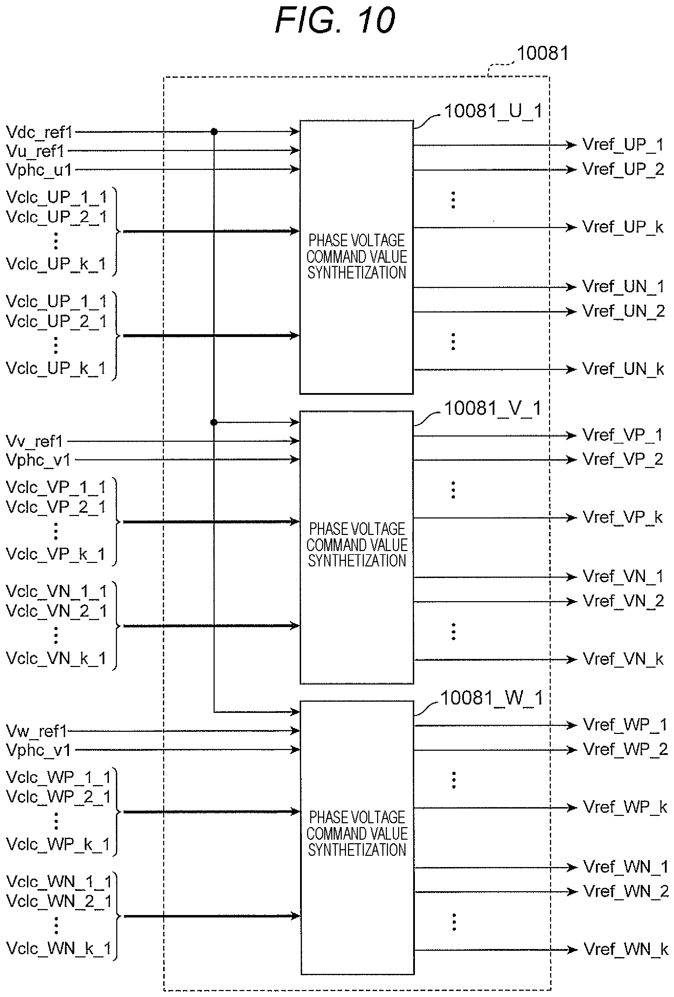

The voltage command value synthesizer 10081 calculates the AC voltage command value of each cell converter by synthesizing the outputs of the AC current controller 10051, the inter-phase balance controller 10061, and the cell voltage balance controller 10071, and the DC output voltage command value Vdc_ref1 of the hydrogen production calculation unit 10030, and outputs the result to the gate signal generator 10091. Details will be described later using FIG. 10.

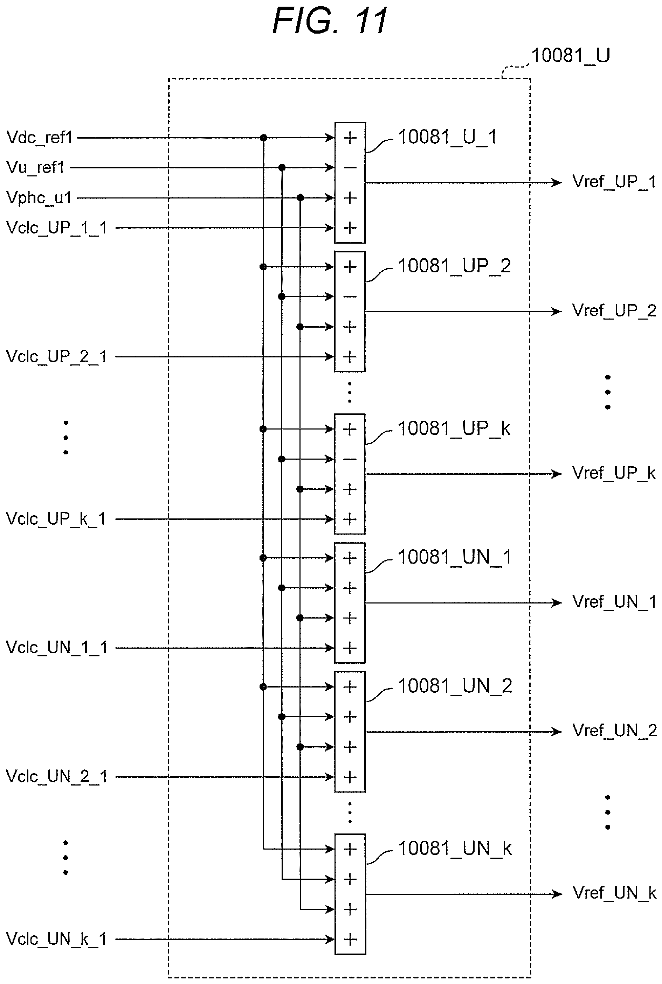

The gate signal generator 10091 calculates a gate signal group GateSig1 of each cell converter by comparing triangular waves in which the phase is equally shifted with respect to each cell in the arm on the output of the voltage command value synthesizer 10081, and outputs the gate signal group GateSig1 to the self-excited power converter 10. Details will be described later using FIG. 11.

Hereinafter, details of each calculator of the unit converter control unit will be described.

FIG. 7 is a block diagram of the AC current command value calculator 10041 and the AC current controller 10051.

Main functions of the AC current command value calculator 10041 are: calculating a voltage phase in the AC system (function 1); calculating active power and reactive power output from the self-excited power converter 10 to the system, and calculating a reactive current command value for controlling reactive power output from the self-excited power converter 10 to the AC side at a specified power factor (function 2); calculating an active current command value so that an average value of capacitor voltages of cell converters of the self-excited power converter 10 is maintained at a predetermined value (function 3); and calculating a voltage feedforward term for balancing the system voltage and the AC output voltage of the self-excited power converter 10 in advance so that the AC output current follows the calculated AC current command value (function 4). Control blocks corresponding to the respective functions will be sequentially described.

Function 1: Phase Detection

The system voltage detection value Grid_voltage is input to an $\alpha$-$\beta$ converter 10041_1. The $\alpha$-$\beta$ converter 10041_1 calculates an $\alpha$ component and a $\beta$ component from the u-phase, v-phase, and w-phase detection values of the system voltage by a conversion equation shown in Math. 1, and outputs the $\alpha$ component and the $\beta$ component to a phase detector 10041_2 and a d-q converter 10041_3.

[Math. 1]

$$\begin{bmatrix} \alpha \\ \beta \end{bmatrix} = \frac{2}{3} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} u \\ v \\ w \end{bmatrix}$$

The phase detector 10041_2 performs d-q conversion indicated by Math. 2 using the internally oscillated sine waves $\cos\omega t$ and $\sin\omega t$, and calculates the positive-phase voltage phase $\theta$ ($=\omega t$) by phase locked loop (PLL) that calculates the system phase by correcting $\omega$ so that the q-axis component of the calculation result becomes 0.

[Math. 2]

$$\begin{bmatrix} V_{sd} \\ V_{sq} \end{bmatrix} = \begin{bmatrix} \cos\omega t & \sin\omega t \\ -\sin\omega t & \cos\omega t \end{bmatrix} \begin{bmatrix} V_{s\alpha} \\ V_{s\beta} \end{bmatrix}$$

Here, Vs$\alpha$ and Vs$\beta$ are an $\alpha$ component and a $\beta$ component of the system voltage detection value, and Vsd and Vsq are a d-axis component and a q-axis component of the system voltage subjected to d-q conversion by the internally oscillated sine waves $\cos\omega t$ and $\sin\omega t$. Since the PLL is a logic frequently used in phase detection in the system interconnection converter, detailed description of a correction logic of the internal oscillation angular frequency $\omega$ and the

like will be omitted.

A phase detector 10042_1 outputs θ which is the calculation result to the d-q converters 10041_3 and 10041_10 and the AC current controller 10051.

Function 2: Calculate of Reactive Current Command Value

This function is realized by calculating the system voltage and the d-q component of the system output current of the self-excited power converter 10, calculating the active power and the reactive power of the system output of the self-excited power converter 10 using the system voltage and the d-q component as inputs, and calculating the reactive current command value that matches the reactive power command value calculated from the active power and the power factor command value with the reactive power output value.

The d-q component of the system voltage is calculated as follows. The d-q converter 10041_3 uses the output values Vsα and Vsβ of the α-β converter 10041_1 and the phase θ as inputs, and performs rotational coordinate conversion on the α component and the β component of the system voltage of the fixed coordinate system to calculate a d-axis component and a q-axis component as represented by Math. 3.

[Math. 3]

$$\begin{bmatrix} d \\ q \end{bmatrix} = \begin{bmatrix} \cos\theta & \sin\theta \\ -\sin\theta & \cos\theta \end{bmatrix} \begin{bmatrix} \alpha \\ \beta \end{bmatrix}$$

The calculated d-axis component Vsd and q-axis component Vsq of the system voltage are output to low-pass filters 10041_4 and 10041_5 and a PQ calculator 10041_11.

The calculation of the d-q component of the system output current is realized as follows. The detection values I_UP_1 and I_UN_1 of the arm current are input to a subtractor 10041_6. From this difference, a system output current U-phase component I_U output from the self-excited power converter 10 toward the transformer 20 is calculated. Similarly, the V-phase component I_V and the W-phase component I_W of the system output current are calculated by subtractors 10041_7 and 10041_8 from the V-phase and W-phase arm currents, and I_U, I_V, and I_W are output to an α-β converter 10041_9. Similarly to 10041_1, the α-β converter 10041_9 calculates the α component and the β component of the output current by performing a matrix operation of Math. 1, and outputs the α component and the β component to the d-q converter 10041_10.

Similarly to the d-q converter 10041_3, the d-q converter calculates cosθ and sinθ from the system voltage phase θ, and performs rotational coordinate conversion using cosθ and sinθ to calculate a d-axis component Isd_1 and a q-axis component Isq_1 of the system output current. Isd_1 and Isq_1 are output to the PQ calculator 10041_11 and the AC current controller 10051. The PQ calculator 10041_11 calculates an active power output value P and a reactive power output value Q to be output to the system of the self-excited power converter 10 according to Math. 4.

[Math. 4]

$$\begin{cases} P = V_{sd}I_{sd} + V_{sq}I_{sq} \\ Q = -V_{sd}I_{sq} + V_{sq}I_{sd} \end{cases}$$

The active power P is multiplied by the power factor command value PF_Ref by a multiplier 10041_12 to calculate a reactive power command value Qref, and a reactive power controller 10041_13 calculates a reactive current command value Isq_ref1 such that the reactive power command value matches the reactive power output value Q calculated by the PQ calculator 10041_11. The reactive power controller 10041_13 includes a PI controller having a difference between the reactive power command value Qref and the reactive power output value Q as an input.

Function 3: Calculation of Active Current Command Value

The AC current command value calculator 10041 satisfies the function by calculating an average value of the capacitor voltage detection values of the cell converters of the self-excited power converter 10 and calculating an active current so that the average value matches a predetermined voltage value.

Specifically, the DC voltage detection values of all the cell converters constituting the self-excited power converter 10 are input to an average value calculator 10041_14, and the average value thereof is input to an average DC voltage controller 10041_15. The average DC voltage controller 10041_15 calculates Isd_ref1 so that the predetermined voltage value Vdc_cell_ref matches the average value calculator 10041_14. The average DC voltage controller 10041_15 subtracts Vdc_cell_ref from the output of the average value calculator 10041_14 and performs PI control calculation with the difference as an input to calculate Isd_ref1, thereby realizing transmission and reception of active power with the AC system for maintaining the capacitor voltage of the cell converter.

Function 4: Calculation of Voltage Feedforward Term

As described above, the d-q converter 10041_3 calculates the d-axis component Vsd and the q-axis component Vsq of the system voltage. Low-pass filter operations are performed on Vsd and Vsq by low-pass filters 10041_4 and 10041_5. As a result, the d-axis component Vsd_fil and the q-axis component Vsq_fil in which the gains are reduced with respect to the system voltage harmonic components included in Vsd and Vsq are calculated and output to the AC current controller 10051 as feedforward terms. As a result, there is no phase delay or gain reduction with respect to the commercial frequency component, and it is possible to perform feedforward while avoiding harmonic amplification due to a calculation delay of the integrated control device 100 or a delay caused by the switching frequency of the self-excited power converter 10 with respect to the power supply harmonic.

Next, calculation blocks of the AC current controller 10051 will be described. The active current command value Isd_ref1, the reactive current command value Isq_ref1, and the active current Isd_1 and the reactive current Isq_1 output from the self-excited power converter 10, which are calculated by the AC current command value calculator 10041, are input to the current controllers 10051_1 and 10051_2, respectively. The current controllers 10051_1 and 10051_2 calculate differences between the current command value and the output current for the d-axis component and the q-axis component, respectively, and calculate correction values Vd_ref1 and Vq_ref1 of the AC output voltage of the self-excited power converter 10 so as to make the differences 0. Specifically, the correction values Vd_ref1 and Vq_ref1 are calculated by using the difference as an input of the PI controller.

Adders 10051_3 and 10051_4 add the d-axis component and the q-axis component to the voltage feedforward term calculated by the AC current command value calculator and the correction value, respectively, and output the sum to an inverse d-q converter 10051_5.

The inverse d-q converter performs matrix operation shown in Math. 5 from the output Vq_ref1 of the adder 10051_3, the output Vd_ref1 of the adder 10051_4, and the system voltage phase input from the AC current command value calculator 10041, calculates the AC voltage command values Vα_ref1 and Vβ_ref1 on the fixed coordinates, and outputs the calculated AC voltage command values to a two-phase/three-phase converter 10051_6.

[Math. 5]

$$\begin{bmatrix} V_{\alpha\_ref1} \\ V_{\beta\_ref1} \end{bmatrix} = \begin{bmatrix} \cos\theta & -\sin\theta \\ \sin\theta & \cos\theta \end{bmatrix} \begin{bmatrix} V_{d\_ref1} \\ V_{q\_ref1} \end{bmatrix}$$

The two-phase/three-phase converter 10051_6 calculates three-phase AC voltage command values Vu_ref1, Vv_ref1, and Vw_ref1 by performing a matrix operation shown in Math. 6 on the output of the inverse d-q converter.

[Math. 6]

$$\begin{bmatrix} V_{u\_ref1} \\ V_{v\_ref1} \\ V_{w\_ref1} \end{bmatrix} = \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} V_{\alpha\_ref1} \\ V_{\beta\_ref1} \end{bmatrix}$$

The output of the two-phase/three-phase converter 10051_6 is input to the voltage command value synthesizer 10081.

Next, calculation blocks of the inter-phase balance controller 10061 will be described using FIG. 8.

The arm current detection values I_UP_1, I_UN_1, IVP_1, I_VN_1, I_WP_1, and I_WN_1 are added by adders 10061_1, 10061_2, and 10061_3 for each of the U phase, the V phase, and the W phase, and the sum is multiplied by 1/2 by gain multipliers 10061_4, 10061_5, and 10061_6 to calculate the current flowing through the leg of each phase from the DC output terminal N side to the P side. The outputs of the multipliers 10061_4, 10061_5, and 10061_6 are input to adder 10061_7 and subtractors 10061_9, 10061_10, and 10061_11.

The adder 10061_7 adds the currents flowing through the U-phase, V-phase, and W-phase legs, and a gain multiplier 10061_8 multiplies the sum by 1/3 to calculate an average value. The average value is output to the subtractors 10061_9, 10061_10, and 10061_11. As a result, the difference of the current flowing through each phase leg can be calculated with respect to the average value of the current component flowing through the leg of each phase, and the value obtained by multiplying the difference by the compensation gain by gain multipliers 10061_12, 10061_13, and 10061_14 is output to the voltage command value synthesizer 10081 as the voltage command values vphc_u1, vphc_v1, and vphc_w1 for balancing the leg currents between the phases. Here, since the voltage command values vphc_u1, vphc_v1, and vphc_w1 are values calculated by multiplying the difference with respect to the average value of the leg through-current by a constant, the sum of vphc_u1, vphc_v1, and vphc_w1 becomes zero.

Next, the cell voltage balance controller 10071 will be described using FIG. 9.

The cell voltage balance controller 10071 includes six intra-arm cell voltage balance controllers. Since all the intra-arm cell voltage controllers have the same configuration, an intra-arm cell voltage balance controller 10071_1 of the P-side arm of the U phase will be taken as a representative example, and its calculation block will be described.

The intra-arm cell voltage balance controller 10071_1 receives, as input, the cell converter DC voltage detection values Vdc_cell_UP1_1, Vdc_cell_UP_2_1, ..., Vdc_cell_UP_k_1, and the arm current detection value I_UP_1, which are DC capacitor voltage detection values of the cell converters constituting the P-side arm of the U phase, and calculates compensation values Vclc_UP_1_1, Vclc_UP_2_1, ..., and Vdc_UP_k_1 of the output voltage command of each cell converter so as to balance the DC capacitor voltage of the cell converter according to the difference from the average value of the cell voltage detection values and the polarity of the arm current detection value I_UP_1.

Specifically, low-pass filters 10071_1_1_1, 10071_1_1_2, and 10061_1_1_k having an attenuation effect for frequencies equal to or higher than twice the system voltage are applied to the DC capacitor voltage detection value of the cell converter. This is because the cell converter is a single-phase converter, and in principle, the capacitor voltage of the cell converter fluctuates with a cycle twice the system frequency, and when this frequency component is mixed in the compensation value, pulsation is similarly superimposed on the output voltage of the cell converter, and an unintended low-order harmonic current flows out to the system. Therefore, the capacitor pulsation frequency component theoretically generated by the low-pass filter is removed.

The output of the low-pass filter is input to subtractors 10071_1_3_1 to 10071_1_3_k and an average value calculator 10071_1_2, a difference from the output average value of each low-pass filter is calculated by the subtractor, and the difference is output to gain multipliers 10071_1_4_1 to 10071_1_4_k.

The gain multiplier calculates a compensation voltage value proportional to the difference from the average value, and outputs the compensation voltage value to each of the multipliers 10071_1_5_1 to 10071_1_5_k.

The charging current of the capacitor of each cell is determined by the product of the arm current and the output voltage. Therefore, in the intra-arm cell voltage balance controller, the sign of the compensation voltage is changed according to the polarity of the arm current detection value I_UP_1. Specifically, the arm current detection value I_UP_1 is input to an arm current polarity determination unit 10071_1_6, and the determiner outputs 1 if the arm current detection value is positive and outputs -1 if the arm current detection value is negative to the multipliers 10071_1_5_1 to 10071_1_5_k. As a result, the polarity of the arm current can be reflected in the compensation voltage value. The outputs of the multipliers 10071_1_5_1 to 10071_1_5_k are output to the voltage command value synthesizer 10081 as the arm voltage command value compensation values Vclc_UP_1_1 to Vclc_UP_k_1 on the P side of the U phase. Here, since Vclc_UP_1_1 to Vclc_UP_k_1 are values proportional to the difference with respect to the average value of the capacitor voltage detection values of the respective cell converters, the sum thereof becomes zero.

Although the P-side intra-arm cell voltage balance controller of the U phase has been described above, similarly, the state quantity of each arm is similarly input to the N-side arm of the U phase, the P-side arm of the V phase, the N-side arm of the V phase, the P-side arm of the W phase, and the N-side arm of the W phase, and similar calculation is performed to calculate the voltage command value compensation value in each arm, and the calculation result is output to the voltage command value synthesizer 10081.

Next, calculation blocks of the voltage command value synthesizer 10081 will be described using FIGS. 10 and 11. As described above, the AC voltage command values Vu_ref1, Vv_ref1, and Vw_ref1 which are the outputs of the AC current controller 10051, the outputs vphc_u1, vphc_v1, and vphc_w1 of the inter-phase balance controller 10061, the outputs Vclc_UP_1_1 to Vclc WN k 1 of the cell voltage balance controller 10071, and the DC output voltage command value Vdc_ref1 of a DC current controller 10021 described later are input to the voltage command value synthesizer 10081, and the synthesis result is output to the gate signal generator 10091.

The voltage command value synthesizer 10081 includes a phase voltage command value synthesizer 10081_U_1 that synthesizes a U-phase voltage command value with the input signal, a phase voltage command value synthesizer 10081_V_1 that synthesizes a V-phase voltage command value, and a phase voltage command value synthesizer 10081_W_1 that synthesizes a W-phase voltage command value, and calculation blocks of the respective phase voltage command value synthesizers are the same. Here, the calculation block will be described using the phase voltage command value synthesizer 10081_U_1 of the U phase as an example.

FIG. 11 is a block diagram of the phase voltage command value synthesizer 10081_U_1. Cell voltage command value synthesizers 10081_UP_1 to 10081_UP_k that synthesize a voltage command value of the P-side cell converter of the U phase and cell voltage command value synthesizers 10081_UN_1 to 10081_UN_k that synthesize a voltage command value of the N-side cell converter of the U phase are included.

As illustrated in FIG. 11, the P-side cell voltage command value synthesizer of the U phase superimposes the AC voltage command value Vu_ref1 on the other voltage command value or compensation value with a minus sign, and the N-side cell voltage command value synthesizer of the U phase superimposes the AC voltage command value Vu_ref1 on the other voltage command value or compensation value with a plus sign. As a result, for the AC component, a circuit having the DC output terminals P and N of the self-excited power converter 10 as midpoints is constructed. In addition, the AC output current equally flows through the P-side arm and the N-side arm. Therefore, since the voltage drops caused by the AC currents generated in the buffer reactors 70UP and 70UN have the same amplitude and different polarities, the voltage drops caused in the legs are offset.

Outputs Vref_UP_1 to Vref_UP_k and Vref_UN_1 to Vref_UN_k of each cell voltage command value synthesizer are output to the gate signal generator 10091 as U-phase voltage command value synthesis values.

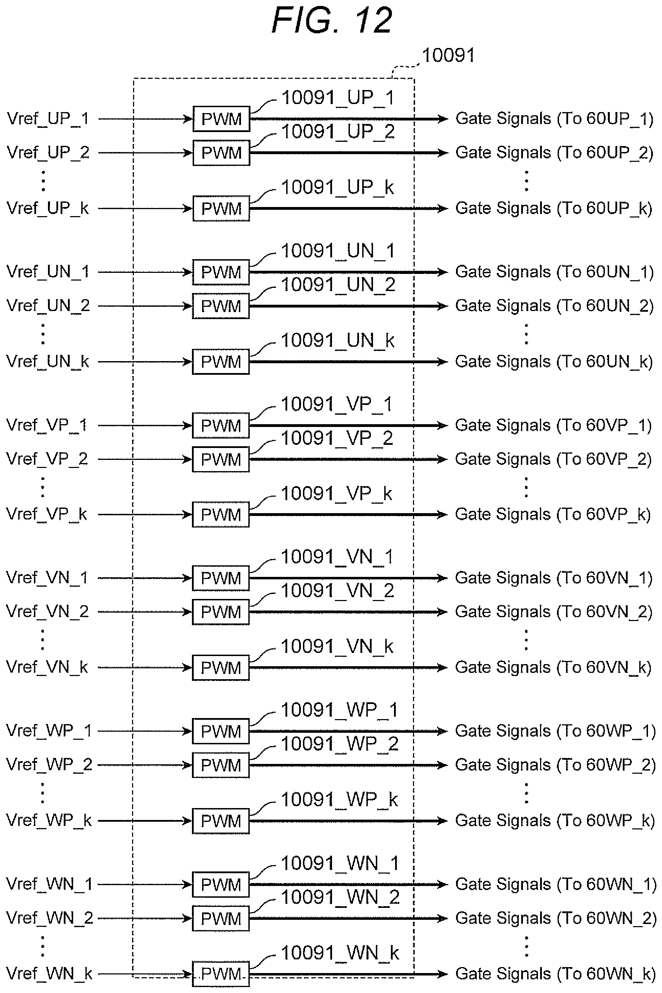

FIG. 12 shows a block diagram of the gate signal generator 10091. The AC output voltage command values Vref_UP_1 to Vref_WN_k of each cell converter output from the voltage command value synthesizer 10081 are input to a PWM modulator that generates a gate signal of each cell converter, and a gate signal of an IGBT of the cell converter is calculated.

PWM modulators 10091_UP_1 to 10091_WN_k are PWM modulators using a triangular wave as a carrier wave, and the carrier wave frequencies of the modulators are equal to each other. In addition, in the PWM modulator that generates the gate signal of the cell converter in the same arm, the phases of the carrier waves are shifted by a value obtained by dividing 180 deg by the number of intra-arm cell converters k, thereby suppressing harmonic components output to the AC output terminal.

With the above controller, the self-excited power converter 10 can maintain the capacitor voltage of the cell converter and control the power factor of the power output to the system side to a desired value.

Next, a DC output current control logic of the self-excited power converter, which is a novel point of the present invention, will be described with reference to FIG. 4 again.

The DC current control calculation of the self-excited power converters 10 and 11 is performed by the hydrogen production calculation unit 10030. The hydrogen production calculation unit 10030 includes a DC current command value calculator 1001 that calculates DC output current command values Idc_ref1 and Idc_ref2 of the self-excited power converters 10 and 11 by using the hydrogen production amount command value H2_Gen_Ref and the temperature information Temp_electrolyser of the water electrolysis tank unit 30 as inputs, a DC current controller 10021 that calculates a DC output voltage command value Vdc_ref1 that adjusts a voltage command value of a cell converter of the self-excited power converter 10 so that the DC output current detection value I_dc_1 matches the DC output current command value Idc_ref1 based on the DC output current command value Idc_ref1, and the DC output current detection value I_dc_1 and the DC output voltage detection value V_load_1 of the self-excited power converter 10, and a DC current controller 10022 that calculates a DC output voltage command value Vdc_ref2 for adjusting the voltage command value of the cell converter of the self-excited power converter 11 based on Idc_ref2 and the DC output current detection value I_dc_2 and the DC output voltage detection value V_load_2 of the self-excited power converter 11 such that the DC output current detection value I_dc_2 of the self-excited power converter 11 matches Idc_ref2.

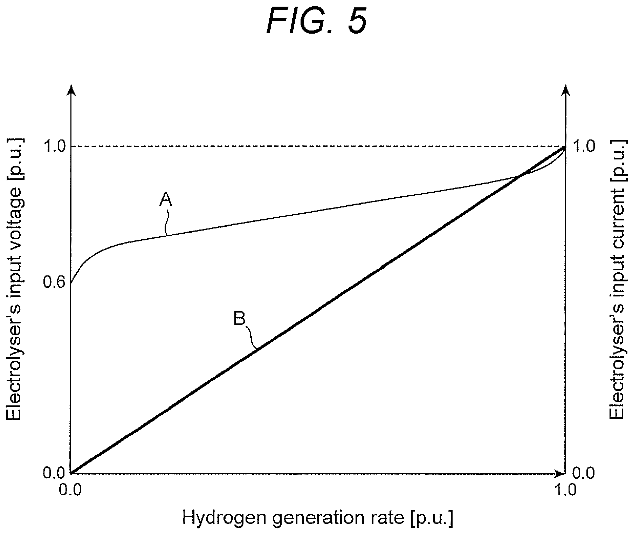

The amount of hydrogen generated in the water electrolysis tank changes linearly with respect to the supplied current. FIG. 5 illustrates an example of the characteristics. The horizontal axis of the graph represents the hydrogen production speed, the first axis (left side) of the vertical axis represents the terminal voltage of the water electrolysis tank, and the second axis (right side) of the vertical axis represents the input current to the water electrolysis tank. A curve indicated by a reference sign A indicates a terminal voltage, and a characteristic indicated by a reference sign B indicates an input current to the water electrolysis tank. As illustrated in FIG. 5, the hydrogen production amount and the input current are represented by linear functions passing through the origin.

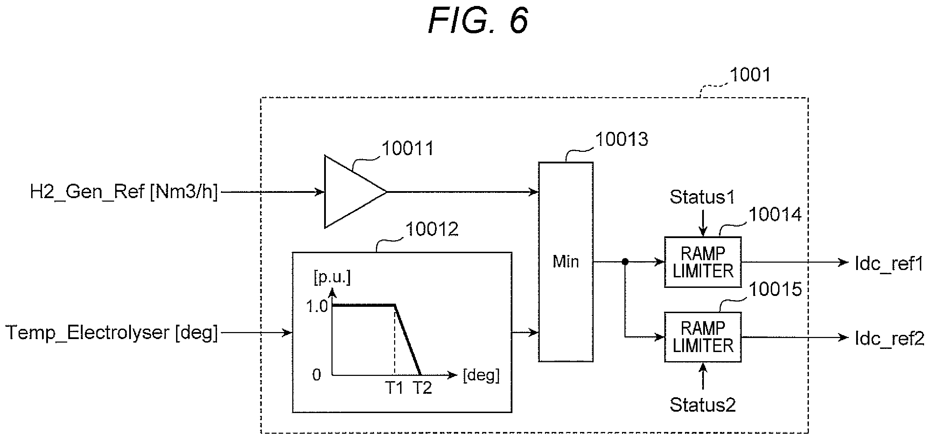

Therefore, as illustrated in FIG. 6, the DC current command value calculator 1001 may convert H2_Gen_Ref [Nm3/h], which is a hydrogen production amount command value, into a current command value using a unit converter 10011 that converts H2_Gen_Ref [Nm3/h] into a per unit value of the DC output current of the self-excited power converters 10 and 11.

However, it is necessary to prevent heating of the water electrolysis tank unit due to the outside air temperature and the water temperature supplied to the water electrolysis tank. Therefore, a hydrogen production limit table 10012 is provided which decreases the value from 1.0 p.u. when the temperature exceeds a predetermined temperature T1 with respect to the temperature information Temp_Electrolyser of the water electrolysis tank unit, and sets the hydrogen production amount to zero when the temperature rises to T2 which is the second predetermined temperature. The output of the limit table and the output of the unit converter 1011 are input to a minimum value calculator 10013, and the minimum value calculator outputs the DC output current command value limited by the limit table to the ramp limiters 10014 and 10015.

The ramp limiter 10014 receives the DC output current command value and Status1 indicating the operation status of the self-excited power converter 10, and increases the DC output current command value Idc_ref1 that is an output at a predetermined time change rate with respect to the DC current command value when the self-excited power converter 10 becomes the operation status 1. The same applies to the ramp limiter 10015, and the DC output command value and Status2 indicating the operation status of the self-excited power converter 11 are input to calculate the DC output current command value Idc_ref2 of the self-excited power converter 11. Here, Status1 is a status variable that becomes 1 when the operation command COM is active and becomes 0 when the operation command COM is negative, and Statsu2 is a status variable that becomes 1 after a predetermined time elapses from when the operation command COM becomes active and becomes 0 when the COM becomes negative.

The DC current controllers 10021 and 10022 receive the DC output current command value and V_load_1, Vload_2, I_dc_1, and I_dc_2 as inputs, respectively, the DC current controller 10021 calculates Vdc_ref1 by the PI controller so that Idc_ref1 matches I_dc_1, and the DC current controller 10022 calculates Vdc_ref2 by the PI controller so that Idc_ref2 matches I_dc_2.

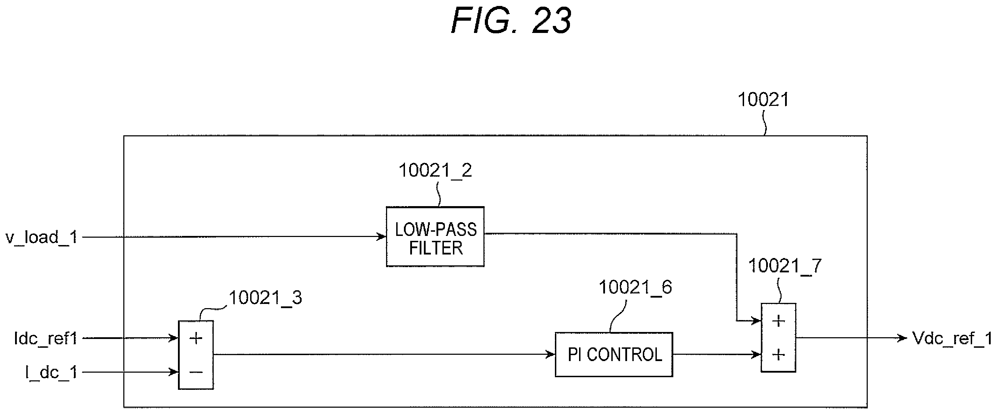

Since the DC current controllers 10021 and 10022 have the same block diagram, the DC current controller 10021 will be described in detail as a representative. FIG. 23 is a block diagram of the DC current controller 10021. The DC current controller 10021 inputs the DC output current command value Idc_ref1 and the DC output current detection value I_dc_1 to a subtractor 10021_3, and the difference is output to a PI controller 10021_6. The PI controller 10021_6 performs PI calculation on the difference between the detection value and the command value of the input DC output current, and outputs the output to an adder 10021_7.

On the other hand, the DC output voltage detection value V_load_1 is input to a low-pass filter 10021_2, and the low-pass filter 10021_2 removes a ripple component caused by switching of the self-excited power converter 10 or 11 and sends the output to the adder 10021_7.

The adder 10021_7 adds the two input signals to calculate Vdc_ref_1. The low-pass filter 10021_2 is mounted with the intention of causing the self-excited power converter 10 to output a DC output voltage similar to the remaining voltage even in a case where there is the remaining voltage in the water electrolysis tank unit 30 and avoiding the inflow of a large DC current at the time of startup.

By outputting Vdc_ref1 and Vdc_ref2 calculated as described above to the above-described voltage command value synthesizer 10081, the self-excited power converters 10 and 11 can supply the DC output current according to the command value to the load, and can avoid an unintended cross current between the self-excited power converters.

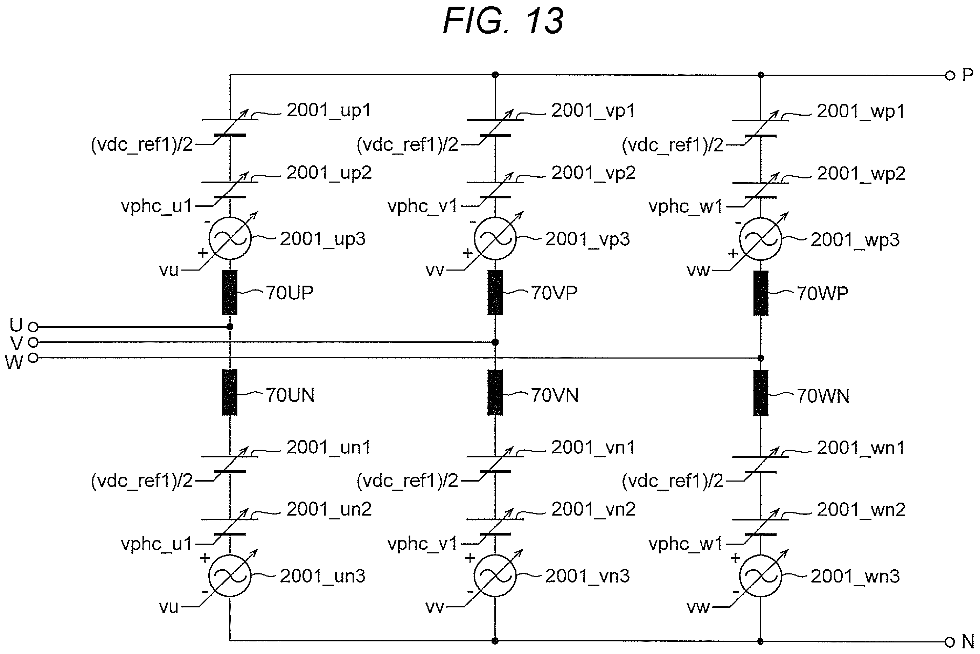

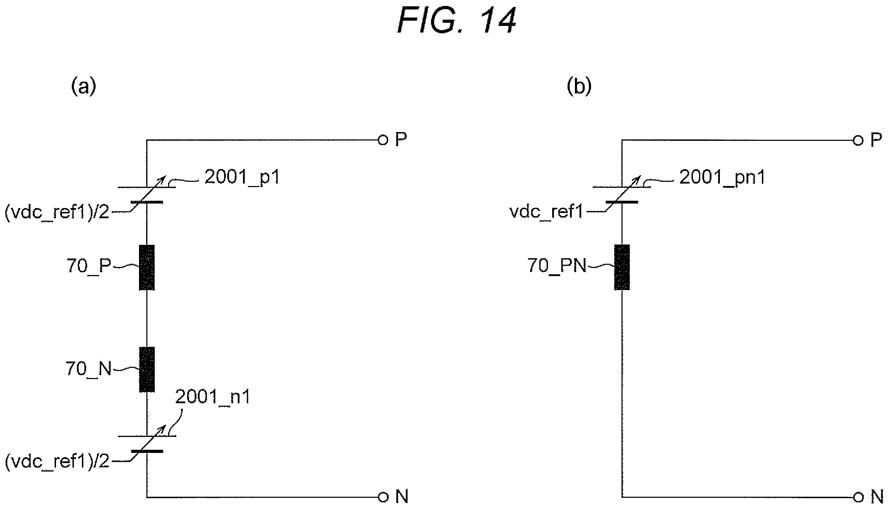

The fact that the self-excited power converter 10 can control the DC output current by the controller will be described using FIGS. 13 and 14.

FIG. 13 illustrates an equivalent circuit based on an instantaneous average value of the self-excited power converter 10. The P-side arm of the U phase is represented by a variable voltage source and a buffer reactor 70UP indicating a sum vu of voltage components output from the cell converter by the AC voltage command value Vu_ref1, a sum vphc_u1 of voltage components output from the cell converter by the inter-phase balance control, and a sum (vdc_ref1)/2 of voltage components output from the cell converter by the DC current controller. As described in the block diagram of the phase voltage command value synthesizer 10081_U_1 using FIG. 11, the AC current control voltage command value is superimposed with a minus sign on the cell converter group of the P-side arm of the U phase. Therefore, also in the equivalent circuit, vu is an output voltage component based on the P side.

FIG. 13 does not illustrate a voltage source corresponding to the output of the cell voltage balance controller. As described in the description of the cell voltage balance controller using FIG. 9, since the sum of Vclc_UP_1_1 to Vclc_UP_k_1, which are capacitor voltage compensation terms for each cell converter, becomes 0, the voltage source indicating the output of the cell voltage balance controller does not appear in FIG. 13 in which the arm is reduced by the instantaneous average value.

Similarly, the N-side arm of the U phase can represent an equivalent circuit as a series circuit of three voltage sources and a buffer reactor 70UN. Here, in the N-side arm of the U phase, the sum vu of the cell converter output voltages according to the AC current control voltage command value is an output voltage component based on the N-side. The V phase and the W phase are also similar to those described above.

FIG. 14(a) is obtained by converting the equivalent circuit of FIG. 13 into a circuit estimated from the DC output terminals P and N. The AC voltage by the AC current control voltage command value is offset in the leg. In addition, the voltage components vphc_u1, vphc_v1, and vphc_w1 output from the cell converter by the inter-phase balance control have a total of 0 as described in the description of the inter-phase balance controller 10061 using FIG. 8. Therefore, the three-phase leg does not appear in the equivalent circuit of FIG. 14(a) collectively showing the three-phase leg. In addition, the voltage drop caused by the AC output current in the buffer reactors on the P side and the N side also does not appear in the equivalent circuit of the leg since the polarities are different and the amplitudes are equal. Therefore, only the variable voltage source corresponding to the output voltage component of the cell converter reflecting the output of the DC current controller remains in the equivalent circuit. In addition, since the buffer reactors of the U phase, the V phase, and the W phase are three parallel reactors when viewed from the DC output terminal, they can be expressed as reactors 70_P and 70_N having an inductance of 1/3.

FIG. 14(a) is a series circuit including two reactors and two variable power supplies having the same output, and thus can be organized as in (b). Here, the inductance of the reactor 70_PN is twice that of the reactors 70_P and 70_N.

Therefore, when viewed from the water electrolysis tank unit 30, the self-excited power converter 10 can be represented by a variable voltage source and a reactor according to the output of the DC current controller, and it can be seen that the DC output current can be controlled according to the DC current command value. By enabling the DC output current control according to the DC current command value, it is possible to avoid an unintended cross current from flowing between the self-excited power converters 10 and 11. In addition, since the buffer reactor originally included in the self-excited power converter also contributes as an inductance for controlling the DC output current, it is not necessary to add an additional main circuit element in order to make the DC output current controllable. Therefore, it is possible to realize a compact self-excited rectifier that supplies a DC current to the water electrolysis tank unit 30. In the present embodiment, the main circuit of the power conversion system 1 is configured by the self-excited power converters 10 and 11, but the same effect can be obtained even if there are two or more self-excited power converters.

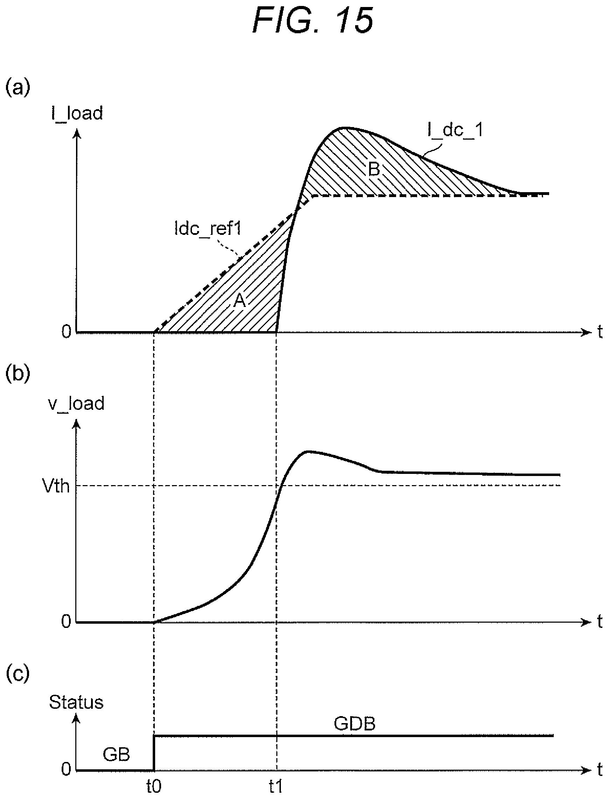

FIG. 15 illustrates a load current I_load, an output voltage v_load, and a gate blocking (GB)/deblocking (GDB) state of the self-excited power converter 10 at the time of power conversion system activation in the order of (a) to (c). As illustrated in FIG. 5, in the water electrolysis tank, a current does not flow unless a voltage to be applied exceeds a predetermined value. Therefore, even if the gate blocking of the cell converter is released at time t0 by COM from the host control device and the calculation of the DC current controller 10021 is started, the current does not flow until the voltage output from the self-excited power converter 10 exceeds the voltage threshold Vth at which the hydrogen production of the water electrolysis tank unit is started.

Since the DC current controllers 10021 and 10022 are constituted by PI controllers, the time integral value of the area A, which is the difference between the DC output current command value Idc_ref1 and the DC output current, is accumulated in the integrator of the PI controller. Therefore, even if the voltages output from the self-excited power converters 10 and 11 exceed Vth, current overshoot occurs until the areas A and B become substantially equal, which may cause heating of the water electrolysis tank unit or overload trip of the self-excited power converter.

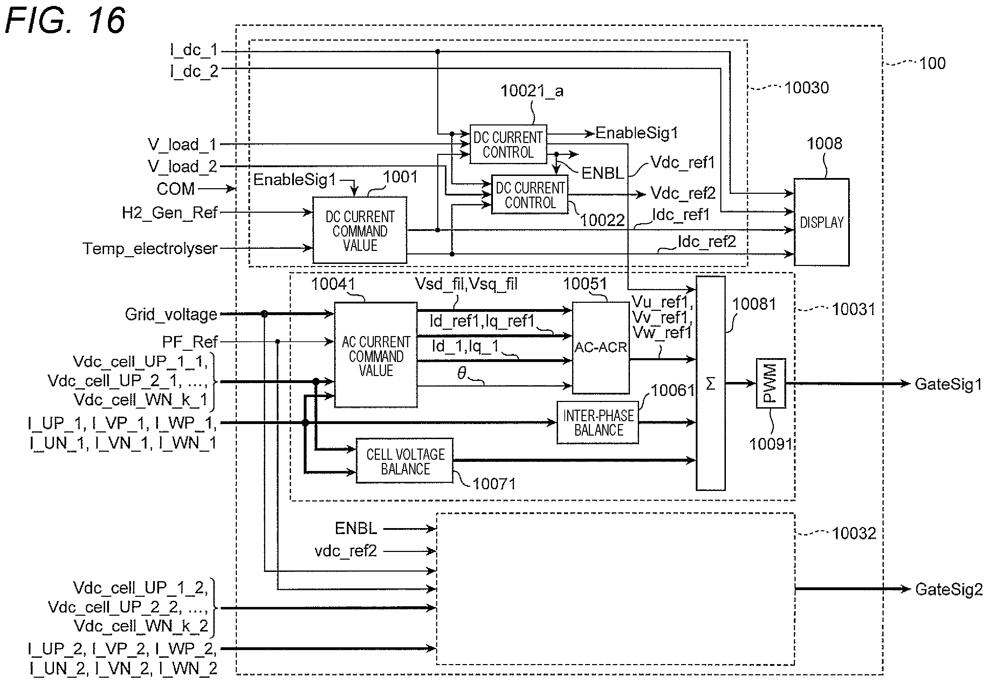

FIG. 16 is a block diagram of an integrated control device included in the second mode of the first embodiment incorporating a proposed measure against the above concern. The difference from the integrated control device 100 illustrated in FIG. 4 is that a DC current controller 10021_a is included instead of the DC current controller 10021 of the self-excited power converter 10, the DC current controller 10021_a includes two types of controllers for calculating the DC output voltage command value Vdc_ref1 in order to suppress the overshoot in the DC output current, a calculation start permission flag EnableSig1 of the DC current command value calculator 1001 is output as a substitute signal for the operation command COM, and the DC current controller 10021_a outputs a calculation start permission flag ENBL of the self-excited power converter 11.

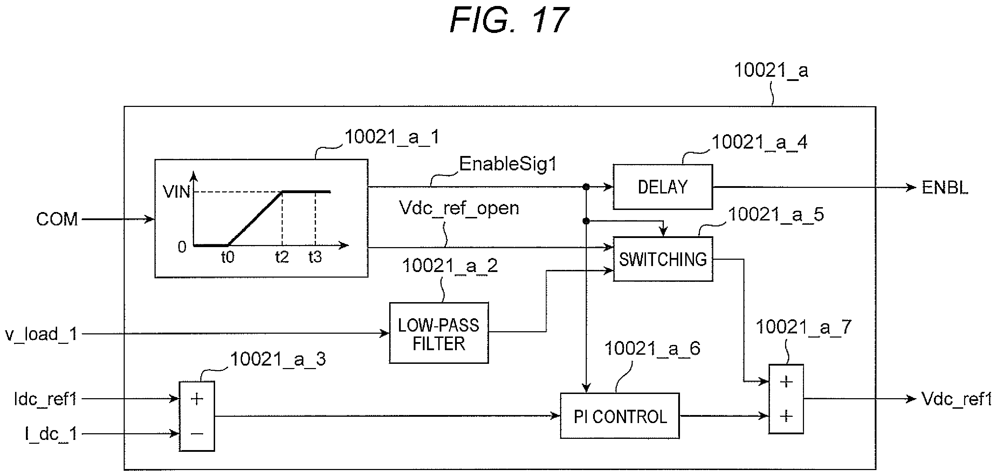

A block diagram of the DC current controller 10021_a will be described using FIG. 17.

The DC current controller 10021_a receives the DC output current command value Idc_ref1, the DC output current detection value I_dc_1, the DC output voltage detection value V_load_1, and the operation command COM, and outputs the DC output voltage command value Vdc_ref1 and the calculation start permission flag ENBL of the self-excited power converter 11.

A subtractor 10021_a_3 inputs Idc_ref1 and I_dc_1, calculates the difference, and outputs the difference to a PI controller 10021_a_6. The PI controller initializes the internal variable to zero when a PI control calculation start permission flag EnableSig1 to be described later is other than 1, performs the PI calculation on the output of the subtractor 10021_a_3 when the PI control calculation start permission flag EnableSig1 is 1, and outputs the calculation result to an adder 10021_a_7. The adder 10021_a_7 adds the output of a switch 10021_a_5 to be described later and the output of the PI controller 10021_a_6, and outputs the sum as a DC output voltage command value Vdc_ref1.

A mechanism for avoiding the DC output current overshoot, which is a feature of the DC current controller 10021_a, will be described below.

The DC current controller 10021_a is configured to perform open loop DC output voltage control until a predetermined time t3 after the operation command COM becomes active, and switch to DC current control after t3. Specifically, a start-up voltage command value calculator 10021_a_1 to which the operation command COM is input is provided, the time at which the operation command COM becomes active is t0, and the DC output voltage command value Vdc_ref_open during the open control is ramped to the initial DC voltage command value VIN, which is a predetermined fixed value from t0, from 0 to a predetermined time t2. It is desirable that VIN be set to a value several % lower than threshold voltage Vth at which water electrolysis tank unit 30 starts hydrogen production. At a predetermined time t3 later than the time t2, the PI control calculation start permission flag EnableSig1 is changed from 0 to 1, and EnableSig1 is output to a delayer 10021_a_4, the switch 10021_a_5, and the PI controller 10021_a_6.

The DC output voltage detection value v_load_1 is input to a low-pass filter 10021_a_2, and the low-pass filter removes a high-frequency component from V_load_1 and outputs its output to the switch 10021_a_5.

When EnableSig1 is other than 1, the switch 10021_a_5 sets the output thereof as Vdc_ref_open, and when EnableSig1 is 1, the switch 10021_a_5 sets the output thereof as the output of the low-pass filter 10021_a_2. With this configuration, Vdc_ref1 becomes the DC voltage command value during the open-loop control until the time t3, and during that time, the PI controller 10021_a_6 is initialized with the internal variable to zero, so that the output and the internal variable of the integrator remain zero regardless of the deviation of the DC output current input to the PI controller 10021_a_6, and it is possible to avoid accumulation of the current deviation.

At the timing at time t3, the output of the PI controller 10021_a_6 is only a proportional term and is a small value, but the switch 10021_a_5 outputs the output of the low-pass filter 10021_a_2 to the adder 10021_a_7, so that the DC voltage applied to the water electrolysis tank unit 30 by the self-excited power converter 10 during the open-loop control can be fed forward to the DC voltage command value, and the control can be smoothly switched from the open-loop DC voltage control to the closed-loop DC output current control. In addition, the delayer 10021_a_4 performs time delay processing on time t3 at which the self-excited power converter 10 is switched to the closed-loop DC current control such that ENBL is switched from zero to 1 at time t5 when a predetermined time has elapsed. As a result, the self-excited power converter 10 can activate the self-excited power converter 11 in a state where the current flows through the water electrolysis tank unit 30, and smooth operation start can be achieved.

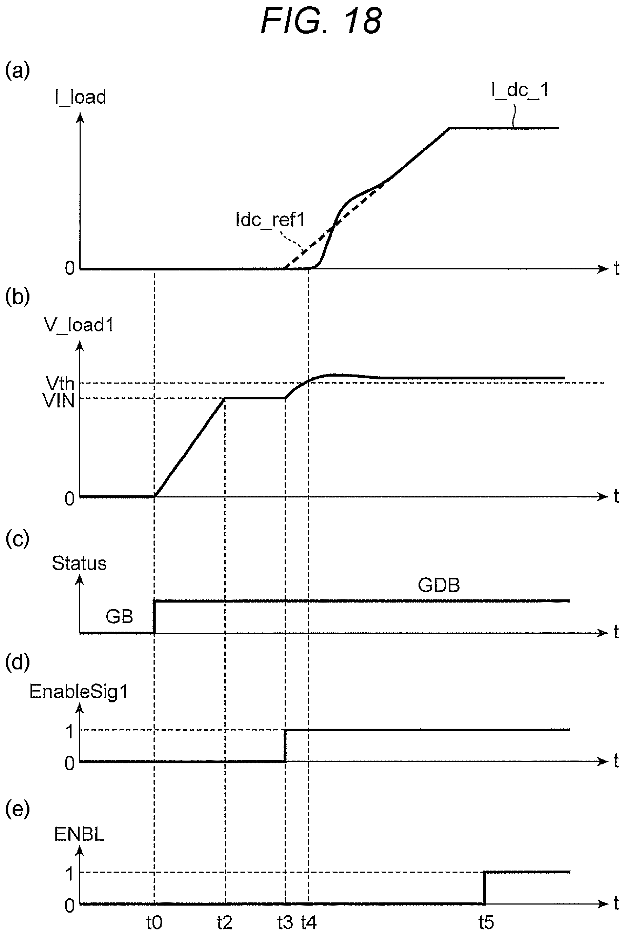

An operation waveform of the power conversion system 1 will be described using FIG. 18. FIG. 18 illustrates a load current I_load, a DC voltage detection value V_load1, a gate blocking/deblocking state of self-excited power converter 10, EnableSig1, and ENBL in the order of (a) to (e), and the horizontal axis represents time. At time t0, the operation command COM becomes active, and the cell converter of the self-excited power converter 10 releases the gate block. From time t0 to time t2, the DC output voltage command value Vdc_ref_open during the open control rises from zero toward VIN in a ramp-like manner. At time t3, EnableSig1 changes from zero to 1, and the control of the self-excited power converter 10 is switched from the open-loop DC voltage control to the closed-loop DC output current control.

In addition, EnableSig1 is input to start ramp increase of the DC output current command value Idc_ref1 of the self-excited power converter 10 from zero to a predetermined value. At time t3, the voltage output to the water electrolysis tank unit 30 increases to VIN close to the threshold voltage Vth at which hydrogen production starts, so that the DC output current starts to flow from the self-excited power converter 10 at time t4 by the DC voltage command value correction by the DC current controller. Therefore, the current deviation time integral value accumulated in the integrator of the PI controller 10021_a_6 for DC current control is greatly reduced as compared with the operation example illustrated in FIG. 15, and the overshoot amount appearing in the DC output current can be reduced.

Upon reception of the ENBL signal, which is a signal delayed by time relative to EnableSig1, the self-excited power converter 11 is activated by closed-loop current control. At time t5, since the self-excited power converter 10 has already applied a voltage equal to or higher than the threshold for starting hydrogen production to the water electrolysis tank unit 30, the self-excited power converter 11 can supply a current to the water electrolysis tank unit 30 without causing excessive overshoot even without having a control switching mechanism.

According to the present embodiment, by connecting the self-excited power converters 10 and 11 in parallel at the DC output terminal, it is possible to supply a current larger than a DC current that can be supplied by a single device to the water electrolysis tank unit as a load. In addition, it is possible to mount DC output current control according to the DC current command value on the self-excited power converters 10 and 11. As a result, it is possible to avoid an unintended cross current from flowing between the self-excited power converters 10 and 11, and a decrease in the utilization rate of the device. Furthermore, since the buffer reactor originally included in the self-excited power converter also contributes as an inductance for controlling the DC output current, it is not necessary to add an additional main circuit element in order to make the DC output current controllable. Therefore, it is possible to realize a compact self-excited rectifier that supplies a DC current to the water electrolysis tank unit 30.

In addition, in the second mode of the first embodiment, by having a function of switching control at the time of activating the self-excited power converter 10 between open-loop voltage control and closed-loop DC output current control, it is possible to avoid excessive overshoot of the current supplied to the water electrolysis tank unit 30.

[Second Embodiment]

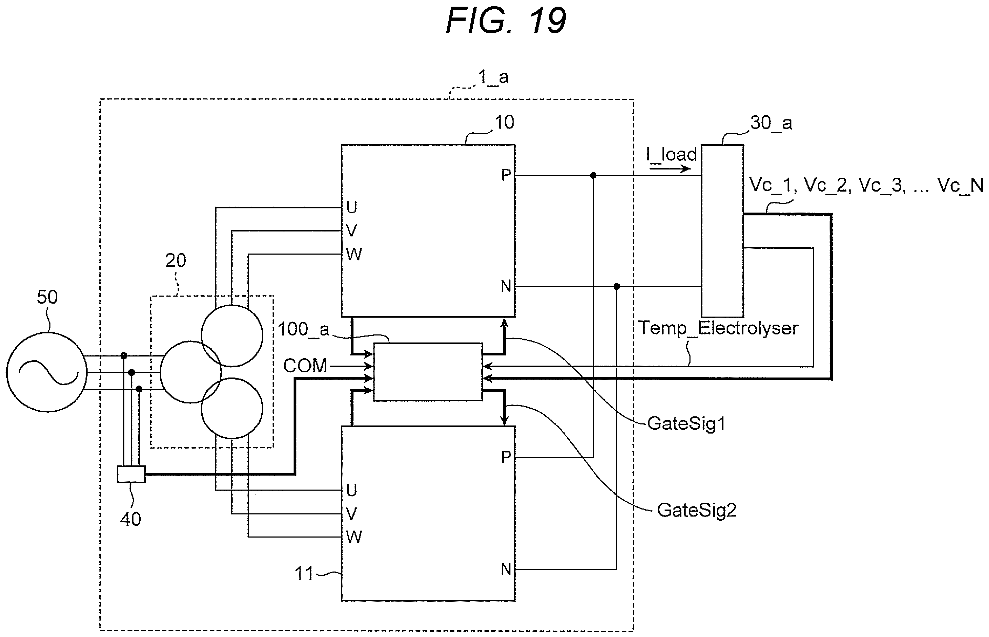

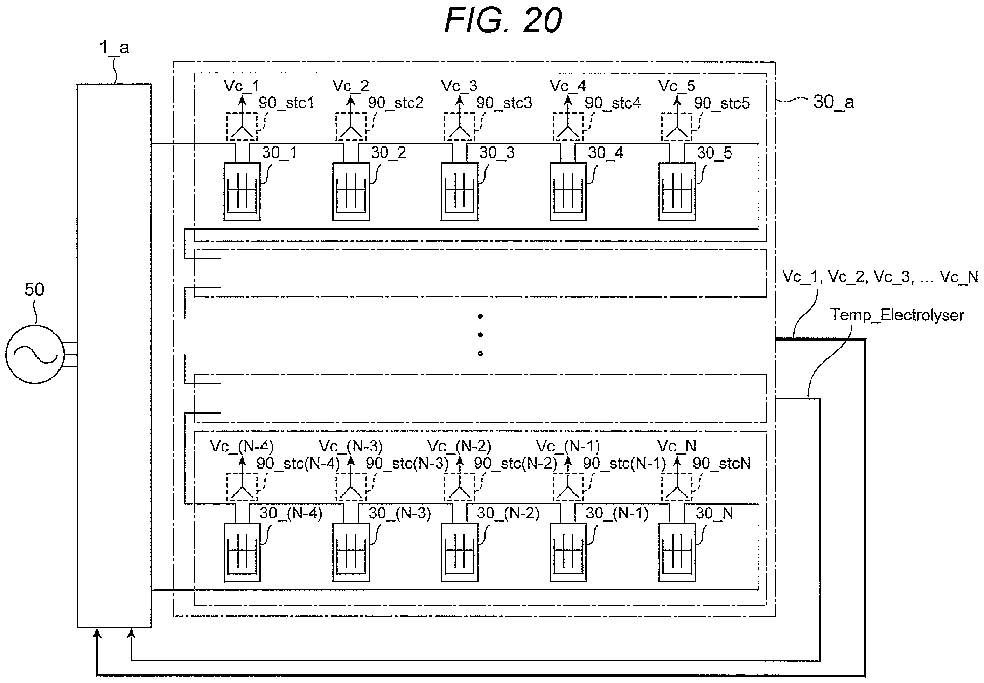

A second embodiment of the present invention will be described using FIGS. 19 and 20. The difference between the second embodiment and the first embodiment of the present invention is that, as illustrated in FIG. 19, in addition to the temperature information Temp_Electrolyser, a water electrolysis tank unit 30_a outputs, to a power conversion system 1_a, stack voltage detection values Vc_1 to Vc_N, which are detection values of the inter-electrode voltage detection values of N water electrolysis tank stacks 30_1 to 30_N constructing the water electrolysis tank unit, and the power conversion system 1_a has a function of evaluating the soundness of the water electrolysis tank stack from the load current I_load and the stack voltage detection value, and stopping the supply of the load current to the water electrolysis tank unit 30_a when an abnormality is found. In a case where the load device is configured by a serial body of a plurality of elements, it is difficult to detect an abnormality of the element from the power supply side. The water electrolysis tank stack has low voltage and large current characteristics, and in a system in which the stacks are connected in series for increasing the capacity, the number of series increases, and abnormality detection of the stack becomes difficult. In a case where there is a stack deviating from the standard V-I characteristic of the stack, the power conversion system 1_a illustrated in the second embodiment detects that an abnormality such as an internal short circuit occurs in the stack, and promptly stops the supply of the load current. As a result, the safety of the entire system can be improved. In the second embodiment, the same components are denoted by the same symbols, and redundant descriptions are omitted.

A configuration of the water electrolysis tank unit 30_a will be described using FIG. 20. The water electrolysis tank unit 30_a has a configuration in which a plurality of blocks configured by a serial body of five water electrolysis tank stacks are connected in series. The inter-electrode voltage of the water electrolysis tank stack is measured by voltage sensors 90_stc_1 to 90_stcN, and the detection values Vc_1 to Vc_N are output to an integrated control device 100_a of the power conversion system 1_a.

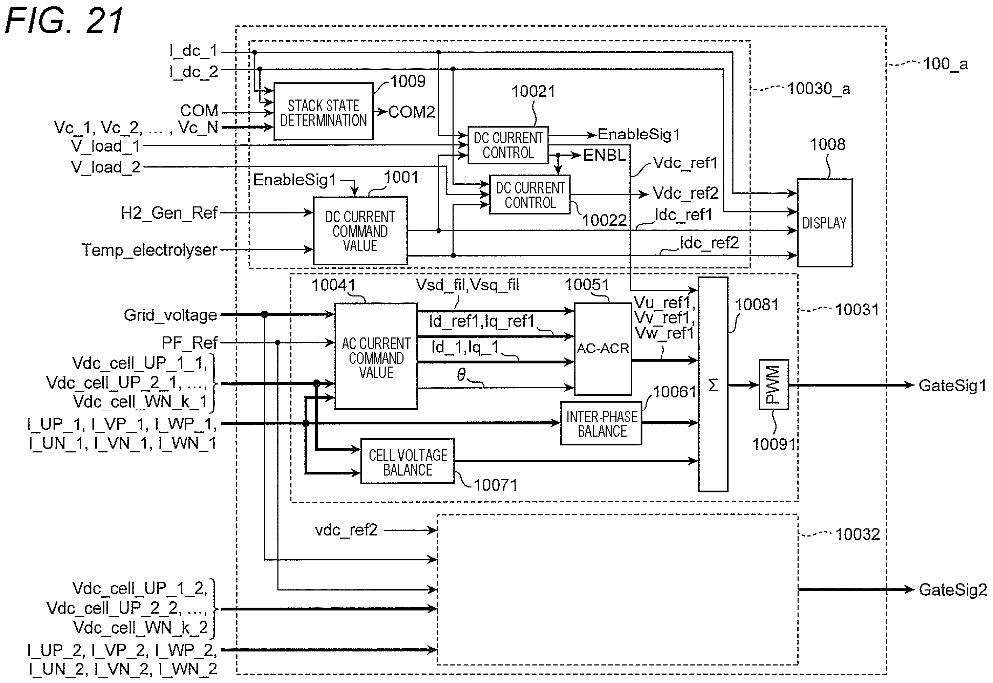

FIG. 21 illustrates a block diagram of the integrated control device 100_a. The difference from the integrated control device 100 of the first embodiment is that a hydrogen production control unit 10030_a includes a water electrolysis tank stack state determiner 1009, and the determination unit calculates a corrected operation command COM2 obtained by correcting the operation command COM by the state determination of the water electrolysis tank stack, and outputs COM2 instead of the operation command COM to a calculator in the integrated control device.

The stack voltage detection values Vc_1 to Vc_N are input to the water electrolysis tank stack state determiner 1009. In addition, the DC output current detection value I_dc_1 of the self-excited power converter 10, the DC output current detection value I_dc_2 of the self-excited power converter 11, and the operation command COM are input to the determiner 1009. The stack state determiner 1009 calculates the load current I_load from I_dc_1 and I_dc_2, and determines whether or not the stack voltage detection values Vc_1 to Vc_N, which are the detection values of the inter-electrode voltage of the water electrolysis tank stacks 30_1 to 30_N, are within the standard voltage range.

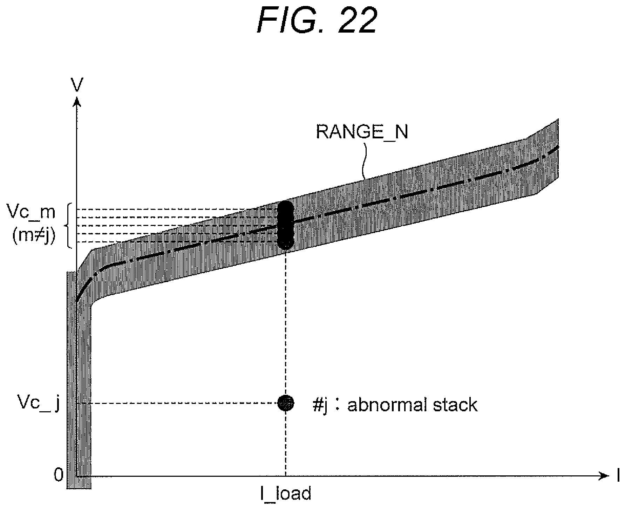

Specifically, the load current is plotted on the horizontal axis and the voltage of the water electrolysis tank stack is plotted on the vertical axis illustrated in FIG. 22, and it is determined whether or not the plot is present in a standard voltage range RANGE_N having a predetermined width with respect to the V-I characteristic of the standard water electrolysis tank shown by a one-dot broken line. In a case where the j-th water electrolysis tank stack has an internal short circuit, the inter-electrode voltage of the stack is below the standard range, and the plot of the stack deviates from the standard voltage range RANGE_N.

In a case where all the stacks are in the standard voltage range, the stack state determiner 1009 outputs the operation command COM to each calculator as the corrected operation command COM2, and in a case where there is a plot deviating from the standard voltage range, the water electrolysis tank stack state determiner 1009 sets the corrected operation command COM2 to negative even if the operation command COM is active, and sets all of GateSig1 and GateSig2 to OFF commands, thereby stopping the operation of the power conversion system 1_a.

By providing the abnormality detection function as described above, in a case where an internal short circuit occurs in the water electrolysis tank stack, the operation of the power conversion system 1_a is promptly stopped to stop the supply of the load current, and a further internal temperature rise due to the current supply to the abnormal stack in which the internal short circuit occurs can be avoided, and the safety of the system can be improved.

In the present embodiment, the configuration in which the power conversion system 1_a is promptly stopped in a case where the abnormality is detected by the water electrolysis tank stack state determiner 1009 has been described. However, when the abnormality is detected, the current command value output from the self-excited power converters 10 and 11 may be changed to a ramp shape toward zero, and then the gate signal may be turned off. At this time, in order to avoid supplying a current to the abnormal water electrolysis tank stack for a long time, it is desirable to set the speed at which the current command value is changed in a ramp shape to be faster than the rising speed of the current command value when the power conversion system 1_a is activated.

According to the power conversion system 1_a of the present embodiment, it is possible to suppress a cross current of the self-excited power converters 10 and 11 via an unintended DC circuit without requiring an additional main circuit element as in the first embodiment. In addition, in a case where an internal short circuit occurs in the water electrolysis tank stack, the supply of the load current can be stopped by immediately stopping the operation of the power conversion system 1_a, and the safety of the system can be improved.

According to the embodiments of the invention described above, the following operational advantages are achieved.

(1) A power conversion system according to the present invention connects to an AC system via a transformer and supplies DC power to a load device, the power conversion system including: a load supply voltage adjustment unit that adjusts a load supply DC voltage based on a load supply DC current command value calculated based on a load state quantity and an operation command; a self-excited power converter that includes a reactor serving to smooth a DC current and suppress a harmonic current flowing out to an AC power supply; and a current control unit that controls a current flowing through the reactor based on an AC current command value for maintaining a DC capacitor voltage included in the self-excited power converter at a predetermined value and a current command value for controlling reactive power so that a power factor of AC power output to the AC system side matches a predetermined power factor.

By adopting the above configuration, a cross current circulating between the self-excited power converters can be suppressed, and a power conversion system that is compact and achieves high utilization rate of components can be constructed.

(2) The power conversion system includes a plurality of the self-excited power converters having DC output terminals connected in parallel, and AC terminals of the plurality of self-excited power converters are electrically connected to a common AC system via the transformer, and the power conversion system further comprises: a control device including a DC current command value calculation unit that calculates a DC output current command value for each of the self-excited power converters, and a DC output voltage control unit that controls a DC output voltage of the self-excited power converter so that the DC output current command value matches a DC output current of the self-excited power converter. This makes it possible to obtain the effects of the present invention with a minimum configuration.

(3) The self-excited power converter is a multi-modular converter. The present invention is suitably applicable to a system having such a configuration.

(4) The power conversion system further includes: an integrated control device that integrally controls the plurality of self-excited power converters, in which the integrated control device activates another self-excited power converter after one of the plurality of self-excited power converters supplies a DC current to the load device. This makes it possible to smoothly start the operation of the system.

(5) The load supply voltage adjustment unit of the self-excited power converter that first supplies a DC current to a load device includes a DC output voltage control unit that supplies a predetermined voltage to the load device, and a DC output current control unit that adjusts the load supply DC voltage according to the load supply DC current command value, and the self-excited power converter further includes a switching unit that switches a control means to a DC output current control unit after the DC output voltage control unit at a start of operation of the self-excited power converter. This enables smooth control switching from the open-loop DC voltage control to the closed-loop DC output current control.

(6) The load device is a water electrolysis tank. The present invention has been made to be applied to a device having low pressure and large current characteristics such as a water electrolysis tank.

(7) The load state quantity includes temperature information. This enables appropriate control according to the temperature state of the load device.

(8) The water electrolysis tank includes a serial body of a plurality of water electrolysis tank stacks, the load state quantity includes an inter-electrode voltage of the water electrolysis tank stack, and the power conversion system comprises: a soundness confirmation unit that confirms soundness of the water electrolysis tank stack from a current supplied to the load device and the inter-electrode voltage; and a stop unit that stops current output to the water electrolysis tank in a case where the soundness confirmation unit detects an abnormality in the water electrolysis tank stack. This makes it possible to accurately detect the occurrence of abnormality even in a case where the load device is configured by a serial body of a plurality of elements.

(9) The power conversion system includes a display device that displays a load supply DC current command value and a detection value of a load supply DC current supplied from the power conversion system to a load. As a result, the operator of the system can confirm the behavior of the system based on the information displayed on the display device.

(10) In addition, the present invention also includes a control method of a power conversion system corresponding to the power conversion system defined in the above (1) to (9).

Further, the invention is not limited to the above embodiments, and various modifications may be contained. For example, the above-described embodiments of the invention have been described in detail in a clearly understandable way. The invention is not necessarily limited to those having all the described configurations. In addition, some of the configurations of a certain embodiment can be replaced with the configuration of the other embodiment. In addition, it is possible to add the configuration of one embodiment to the configuration of another embodiment. In addition, it is possible to delete a part of the configuration of each embodiment and add/replace another configuration.

Reference Signs List

| 1 | power conversion system |
|---|---|
| 10, 11 | self-excited power converter |
| 20 | transformer |
| 30 | water electrolysis tank unit |
| 100 | integrated control device |
| COM | operation command |
| 1001 | DC current command value calculator Temp_Electrolyser water electrolysis tank temperature information |

**Claims**

1. A power conversion system that connects to an AC system via a transformer and supplies DC power to a load device, the power conversion system comprising:

   a load supply voltage adjustment unit that adjusts a load supply DC voltage based on a load supply DC current command value calculated based on a load state quantity and an operation command;
   a self-excited power converter that includes a reactor serving to smooth a DC current and suppress a harmonic current flowing out to an AC power supply; and
   a current control unit that controls a current flowing through the reactor based on an AC current command value for maintaining a DC capacitor voltage included in the self-excited power converter at a predetermined value and a current command value for controlling reactive power so that a power factor of AC power output to the AC system side matches a predetermined power factor.

2. The power conversion system according to claim 1, wherein

   the power conversion system includes a plurality of the self-excited power converters having DC output terminals connected in parallel, and AC terminals of the plurality of self-excited power converters are electrically connected to a common AC system via the transformer, and
   the power conversion system further comprises:

   a control device including a DC current command value calculation unit that calculates a DC output current command value for each of the self-excited power converters, and
   a DC output voltage control unit that controls a DC output voltage of the self-excited power converter so that the DC output current command value matches a DC output current of the self-excited power converter.

3. The power conversion system according to claim 1, wherein the self-excited power converter is a multi-modular converter.

4. The power conversion system according to claim 2, further comprising an integrated control device that integrally controls the plurality of self-excited power converters,
   wherein the integrated control device activates another self-excited power converter after one of the plurality of self-excited power converters supplies a DC current to the load device.

5. The power conversion system according to claim 1, wherein

the load supply voltage adjustment unit of the self-excited power converter that first supplies a DC current to a load device includes a DC output voltage control unit that supplies a predetermined voltage to the load device, and a DC output current control unit that adjusts the load supply DC voltage according to the load supply DC current command value, and
the self-excited power converter further includes a switching unit that switches a control means to a DC output current control unit after the DC output voltage control unit at a start of operation of the self-excited power converter.

6. The power conversion system according to claim 1, wherein the load device is a water electrolysis tank.

7. The power conversion system according to claim 1, wherein the load state quantity includes temperature information.

8. The power conversion system according to claim 6, wherein

the water electrolysis tank includes a serial body of a plurality of water electrolysis tank stacks,
the load state quantity includes an inter-electrode voltage of the water electrolysis tank stack, and
the power conversion system comprises:

a soundness confirmation unit that confirms soundness of the water electrolysis tank stack from a current supplied to the load device and the inter-electrode voltage; and
a stop unit that stops current output to the water electrolysis tank in a case where the soundness confirmation unit detects an abnormality in the water electrolysis tank stack.

9. A control method of a power conversion system that connects to an AC system via a transformer and supplies DC power to a load device, wherein

the power conversion system includes:

a load supply voltage adjustment unit that adjusts a load supply DC voltage based on a load supply DC current command value calculated based on a load state quantity and an operation command; and
a self-excited power converter,

the self-excited power converter includes a reactor serving to smooth a DC current and suppress a harmonic current flowing out to an AC power supply, and
the control method comprises controlling a current flowing through the reactor based on an AC current command value for maintaining a DC capacitor voltage included in the self-excited power converter at a predetermined value and a current command value for controlling reactive power so that a power factor of AC power output to the AC system side matches a predetermined power factor.

10. The control method of the power conversion system according to claim 9, wherein

the power conversion system includes a plurality of the self-excited power converters having DC output terminals connected in parallel, and
the control method comprises:

electrically connecting AC terminals of the plurality of self-excited power converters to a common AC system via the transformer;
calculating individual DC output current command values for the plurality of self-excited power converters; and
controlling a voltage command value of a self-excited power converter such that a DC output current of the self-excited power converter matches the DC output current command value.

11. The control method of the power conversion system according to claim 9, wherein the self-excited power converter is a multi-modular converter.

**12.** The control method of the power conversion system according to claim 10, wherein

the power conversion system further includes an integrated control device that integrally controls the plurality of self-excited power converters, and

the integrated control device activates another self-excited power converter after one of the plurality of self-excited power converters supplies a DC current to the load device.

**13.** The control method of the power conversion system according to claim 9, wherein

a load supply voltage adjustment unit of a self-excited power converter that first supplies a DC current to the load device includes a DC output voltage control unit that supplies a predetermined voltage to the load device, and a DC output current control unit that adjusts the load supply DC voltage according to the load supply DC current command value, and

the self-excited power converter switches to the DC output current control unit after the DC output voltage control unit at a start of operation of the self-excited power converter.

**14.** The control method of the power conversion system according to claim 9, wherein the load device is a water electrolysis tank.

**15.** The control method of the power conversion system according to claim 10, wherein the load state quantity includes temperature information, and the DC output current command value is corrected by the temperature information.

**16.** The control method of the power conversion system according to claim 14, wherein

the water electrolysis tank includes a serial body of a plurality of water electrolysis tank stacks,

the load state quantity includes an inter-electrode voltage of the water electrolysis tank stack,

the power conversion system further includes a soundness confirmation unit that confirms soundness of the water electrolysis tank stack from a current supplied to the load device and the inter-electrode voltage, and

the control method comprises stopping current output to the water electrolysis tank in a case where the soundness confirmation unit detects an abnormality in the water electrolysis tank stack.

**17.** The power conversion system according to claim 1, comprising a display device that displays the load supply DC current command value and a detection value of a load supply current supplied from the power conversion system to the load device.

**18.** The control method of the power conversion system according to claim 9, wherein the power conversion system displays the load supply DC current command value and a detection value of a load supply current supplied from the power conversion system to the load device.

FIG. 1

## FIG. 2

EP 4 583 390 A1

EP 4 583 390 A1

## FIG. 3

FIG. 4

# FIG. 5

## FIG. 6

## FIG. 7

EP 4 583 390 A1

FIG. 8

FIG. 9

EP 4 583 390 A1

# FIG. 10

## FIG. 11

10081_U

Vdc_ref1

Vu_ref1

Vphc_u1

Vclc_UP_1_1

10081_U_1

Vref_UP_1

10081_UP_2

Vref_UP_2

Vclc_UP_2_1

10081_UP_k

Vref_UP_k

Vclc_UP_k_1

10081_UN_1

Vref_UN_1

Vclc_UN_1_1

10081_UN_2

Vref_UN_2

Vclc_UN_2_1

10081_UN_k

Vref_UN_k

Vclc_UN_k_1

# FIG. 12

10091

Vref_UP_1 → [PWM] 10091_UP_1 → Gate Signals (To 60UP_1)

Vref_UP_2 → [PWM] 10091_UP_2 → Gate Signals (To 60UP_2)

⋮

Vref_UP_k → [PWM] 10091_UP_k → Gate Signals (To 60UP_k)

Vref_UN_1 → [PWM] 10091_UN_1 → Gate Signals (To 60UN_1)

Vref_UN_2 → [PWM] 10091_UN_2 → Gate Signals (To 60UN_2)

⋮

Vref_UN_k → [PWM] 10091_UN_k → Gate Signals (To 60UN_k)

Vref_VP_1 → [PWM] 10091_VP_1 → Gate Signals (To 60VP_1)

Vref_VP_2 → [PWM] 10091_VP_2 → Gate Signals (To 60VP_2)

⋮

Vref_VP_k → [PWM] 10091_VP_k → Gate Signals (To 60VP_k)

Vref_VN_1 → [PWM] 10091_VN_1 → Gate Signals (To 60VN_1)

Vref_VN_2 → [PWM] 10091_VN_2 → Gate Signals (To 60VN_2)

⋮

Vref_VN_k → [PWM] 10091_VN_k → Gate Signals (To 60VN_k)

Vref_WP_1 → [PWM] 10091_WP_1 → Gate Signals (To 60WP_1)

Vref_WP_2 → [PWM] 10091_WP_2 → Gate Signals (To 60WP_2)

⋮

Vref_WP_k → [PWM] 10091_WP_k → Gate Signals (To 60WP_k)

Vref_WN_1 → [PWM] 10091_WN_1 → Gate Signals (To 60WN_1)

Vref_WN_2 → [PWM] 10091_WN_2 → Gate Signals (To 60WN_2)

⋮

Vref_WN_k → [PWM] 10091_WN_k → Gate Signals (To 60WN_k)

FIG. 13

EP 4 583 390 A1

## FIG. 14

(a)

(b)

# FIG. 15

(a)

I_load

I_dc_1

B

Idc_ref1

A

0 ————————————————————————→ t

(b)

v_load

Vth

0 ————————————————————————→ t

(c)

Status

GDB

GB

0 ————————————————————————→ t

t0          t1

FIG. 16

# FIG. 17

# FIG. 18

(a)

(b)

(c)

(d)

(e)

## FIG. 19

EP 4 583 390 A1

*FIG. 20*

EP 4 583 390 A1

FIG. 21

EP 4 583 390 A1

## FIG. 22

FIG. 23

EP 4 583 390 A1

**EP 4 583 390 A1**

### INTERNATIONAL SEARCH REPORT

| International application No. |
| --- |
| **PCT/JP2023/006389** |

| A. | CLASSIFICATION OF SUBJECT MATTER |
| --- | --- |

*H02M 7/12*(2006.01)i; *H02M 7/48*(2007.01)i; *H02M 7/493*(2007.01)i
FI:   H02M7/12 W; H02M7/48 R; H02M7/493; H02M7/12 P

According to International Patent Classification (IPC) or to both national classification and IPC

| B. | FIELDS SEARCHED |
| --- | --- |

Minimum documentation searched (classification system followed by classification symbols)

H02M7/12; H02M7/48; H02M7/493

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2012-175834 A (KYOSAN ELECTRIC MFG. CO., LTD.) 10 September 2012 (2012-09-10) <br> entire text, all drawings | 1-18 |
| A | WO 2021/024463 A1 (MITSUBISHI ELECTRIC CORP.) 11 February 2021 (2021-02-11) <br> entire text, all drawings | 1-18 |
| A | WO 2022/070269 A1 (MITSUBISHI ELECTRIC CORP.) 07 April 2022 (2022-04-07) <br> entire text, all drawings | 1-18 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 April 2023** | **16 May 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/006389**

| Patent document cited in search report | | | Publication date (day/month/year) | Patent family member(s) | | | Publication date (day/month/year) |
|---|---|---|---|---|---|---|---|
| JP | 2012-175834 | A | 10 September 2012 | US | 2012/0212191 | A1 | |
| | | | | entire text, all drawings | | | |
| | | | | DE | 102012201045 | A1 | |
| | | | | CN | 102651551 | A | |
| | | | | KR | 10-2012-0096417 | A | |
| WO | 2021/024463 | A1 | 11 February 2021 | EP | 4012869 | A1 | |
| | | | | entire text, all drawings | | | |
| WO | 2022/070269 | A1 | 07 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002234365 A

**Non-patent literature cited in the description**

- Electric infrastructure for Electrolyser systems, Design proposal for AC and DC distribution systems. *Master's thesis in Electric Power Engineering*